(19)

**Europäisches Patentamt**
**European Patent Office**
**Office européen des brevets**

(11) **EP 4 109 141 A1**

(12) **EUROPEAN PATENT APPLICATION**

(43) Date of publication:
**28.12.2022  Bulletin 2022/52**

(21) Application number: **21305851.4**

(22) Date of filing: **21.06.2021**

(51) International Patent Classification (IPC):
**G02B 1/115** *(2015.01)*   **G02B 5/22** *(2006.01)*

(52) Cooperative Patent Classification (CPC):
**G02B 1/115; G02B 5/22;** G02B 5/28

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ESSILOR INTERNATIONAL**
**94220 Charenton-Le-Pont (FR)**

(72) Inventors:
• **DING, Xingzhao**
  **120425 Singapore (SG)**
• **GUILLAIN, Frédéric**
  **78400 CHATOU (FR)**

(74) Representative: **Jacobacci Coralis Harle**
  **32, rue de l'Arcade**
  **75008 Paris (FR)**

(54) **OPTICAL LENS HAVING A LIGHT-ABSORBING INTERFERENTIAL COATING**

(57)    The present invention relates to an optical lens comprising a substrate having a front main face and a rear main face, at least one main face of which being successively coated with (A) a first high refractive index sheet having a refractive index higher than 1.55, (B) a second low refractive index sheet having a refractive index of 1.55 or less in direct contact with the former sheet, (C) a third high refractive index sheet having a refractive index higher than 1.55 in direct contact with the former sheet, a monolayer sub-layer having a thickness higher than or equal to 100 nm in direct contact with the former sheet (C), and a multilayer interferential coating comprising a stack of at least one high refractive index layer and at least one low refractive index layer at least one of the layers of the multilayer interferential coating being a visible light-absorbing layer comprising a visible light absorbing material.

EP 4 109 141 A1

**Description**

The invention relates to an optical article comprising a substrate coated with a multilayer interferential coating, typically an antireflection coating, having an improved abrasion resistance, good thermal resistance and light-absorbing properties, in particular a colored ophthalmic lens, and a method of manufacturing such optical article.

It is a common practice in the art to coat at least one main surface of an optical substrate with several coatings for imparting to the finished article additional or improved optical or mechanical properties. These coatings are designated in general as functional coatings.

The various coatings that may be used to impart a plurality of mechanical and/or optical properties may be impact-resistant coating layers, abrasion- and/or scratch-resistant coating layers, anti-reflection and/or reflective coating layers, and/or anti-fouling layers and/or anti-fog layers.

Different ways to improve the abrasion resistance of an optical article, which is sensitive to scratches from environment, can be found in the literature. For instance, it has been proposed to use a relatively thick sub-layer below the antireflection coating, or increase the total thickness of the anti-reflection coating, such as in JP 2003-195003 and JP 2003-294906, where a lens coated with a primer coating, a hard coat and a 7-layer anti-reflection coating comprising alternated layers of $SiO_2$ and $TiO_2$, the latter being deposited with ion assistance and known to be sensitive to photo-degradation, is described. In JP 2003-294906, it is advised to control the film thicknesses of the first three layers of the antireflection coating (counted from the substrate side), and to use a high ratio of (sum of the physical thicknesses of the $SiO_2$ layers) / (sum of the physical thicknesses of the $TiO_2$ layers) calculated for the first three layers.

WO 2020/104391 discloses an optical lens comprising a substrate having a front main face and a rear main face, at least one main face of which being successively coated with a first high refractive index sheet which does not comprise any $Ta_2O_5$ layer (n > 1.55), a second low refractive index sheet (n ≤ 1.55), a third high refractive index sheet (n > 1.55), a monolayer sub-layer having a thickness higher than or equal to 100 nm, and a multilayer interferential coating comprising a stack of at least one high refractive index layer and at least one low refractive index layer. The mean reflection factor Ruv on said rear main face between 280 nm and 380 nm, weighted by the function $W(\lambda)$ defined in the ISO 13666:1998 standard, is lower than 10 %, for an angle of incidence of 35°.

The most usual technique for coloring optical lenses and obtaining, e.g., sunglasses, consists of soaking the substrate in an aqueous tinting bath comprising solubilized and/or dispersed pigments or dyes, this bath being generally maintained close to boiling point (typically 90 to 95°C). The absorbing pigments/dyes then diffuse under the surface of the substrate. Another known technique consists of incorporating a coloring agent in a coating deposited on the substrate.

Generally speaking, abrasion and scratch resistance are big concerns for sunglasses.

US 7736742 discloses a technique for obtaining uniform coloration in an optical article without performing the conventional tinting step, and provides optical articles such as sunglasses, comprising a transparent substrate made of organic or mineral glass, having at least one main face comprising a multilayer antireflection coating, which comprises at least two visible-absorbing layers deposited by vacuum evaporation. They comprise a sub-stoichiometric titanium oxide, and are such that the relative transmission factor of visible light Tv is reduced by at least 10% as compared to the same article not comprising said visible-absorbing layers.

However, such interferential coating has not been particularly designed to resist abrasion and/or scratch, and this patent is silent as to how a desired visible light mean transmission factor can be reached for a given lens without any tinting step. Indeed, the absorbent layer is obtained from a predetermined mixture of source materials. The absorbance of the coating may depend on the composition of the source material mixture, e.g., the homogeneity and composition fluctuation upon preparing such source material mixture.

Therefore, there is an unfulfilled need to easily control in a flexible manner the transmittance of an interferential coating of an optical article in a wide range of values of visible light mean transmission factors and in various absorptive layer configurations, and simultaneously achieve high mechanical resistance and especially abrasion.

An objective of the current invention is also to provide an optical article comprising an organic or mineral glass substrate bearing an interferential coating, preferably a lens, and more preferably an ophthalmic lens for eyeglasses or sunglasses, having an improved abrasion resistance, a good adhesion to the substrate, a good resistance to heat and temperature variations, i.e., a high critical temperature, and light-absorbing properties in the visible range, so as to be colored, which would be an alternative to already known reflective or antireflective coated optical articles. These properties should be obtained without decreasing the optical performances and other mechanical performances of said article, such as anti-reflection or reflection performances. The coloration of the article should be uniform, stable in time and UV-resistant.

Another aim of this invention is to provide a process of manufacturing the above defined article, which could be easily integrated into the classical manufacturing chain and would avoid heating or tinting the substrate.

The inventors have found that these objectives and needs could be achieved by using a specific combination of layers deposited under and above a thick sub-layer of the interferential coating. This allows in particular to boost the abrasion resistance of the optical article without decreasing the adherence properties of the interferential coating.

Compared to classical interferential coatings, inventive interferential coatings have a better adherence and visible-light-absorbing properties.

Thus, the present invention relates to an optical lens comprising a substrate having a front main face and a rear main face, at least one main face of which being successively coated with:

- (A) a first high refractive index sheet having a refractive index higher than 1.55, which does not comprise any $Ta_2O_5$ layer,
- (B) a second low refractive index sheet having a refractive index of 1.55 or less in direct contact with the former sheet (A),
- (C) a third high refractive index sheet having a refractive index higher than 1.55 in direct contact with the former sheet (B),
- a monolayer sub-layer having a thickness higher than or equal to 100 nm in direct contact with the former sheet (C), and
- a multilayer interferential coating comprising a stack of at least one high refractive index layer having a refractive index higher than 1.55 and at least one low refractive index layer having a refractive index of 1.55 or less, the refractive indexes being expressed for a wavelength of 550 nm, at least one of the layers of the multilayer interferential coating being a visible-light-absorbing layer comprising a light absorbing material.

The system composed of sheets (A), (B) and (C) and the sub-layer is used herein as a mechanical and adherence system, while the interferential coating is used as an optical system, allowing to achieve any kind of transmission category.

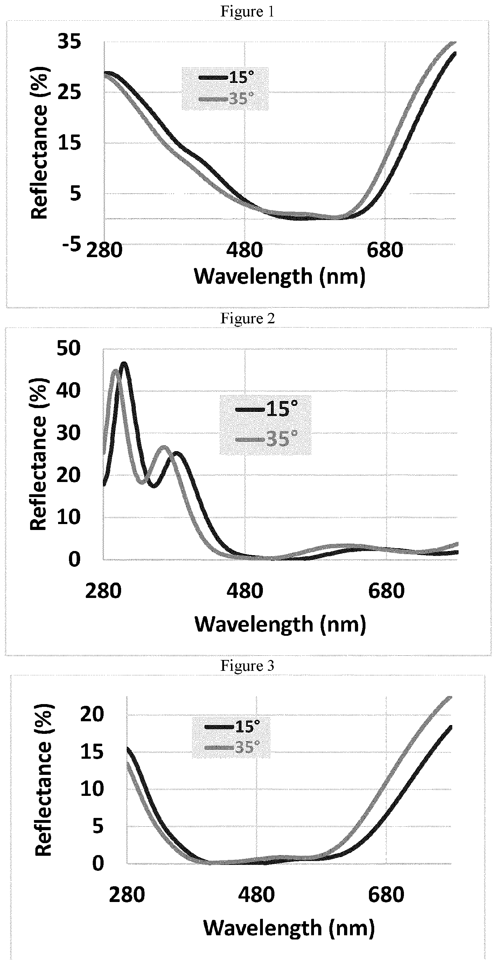

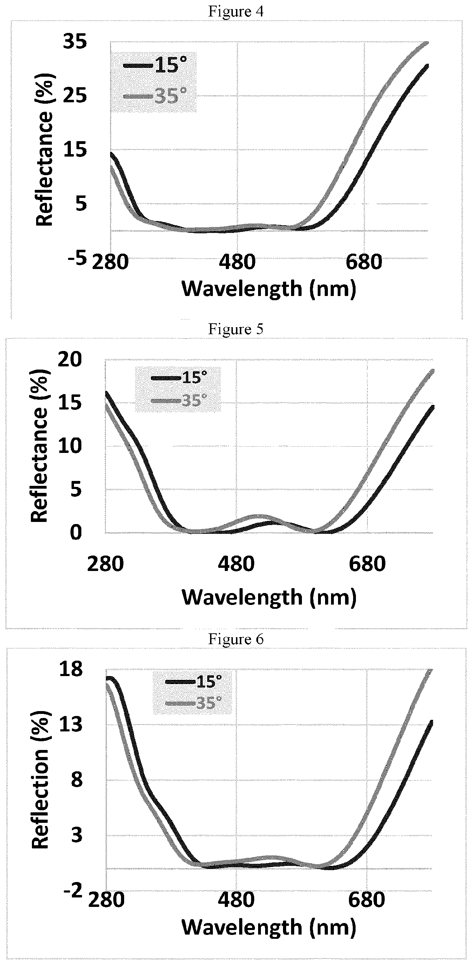

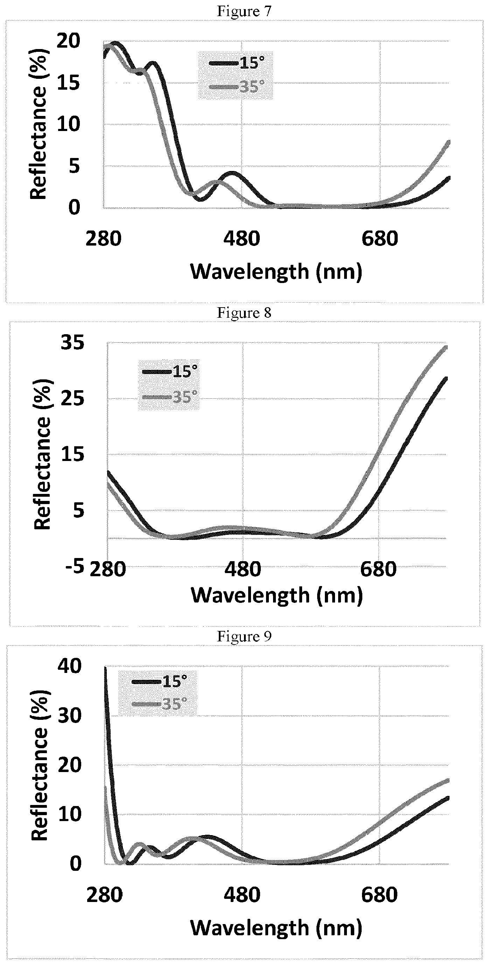

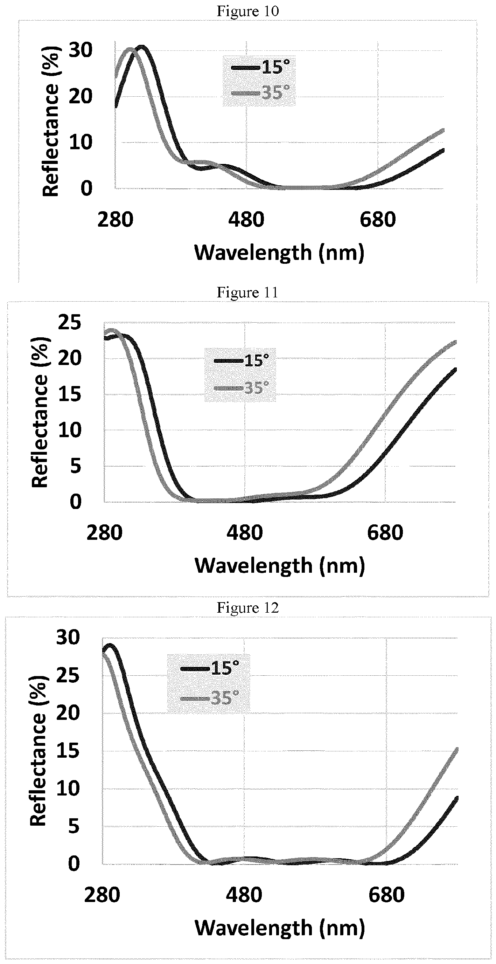

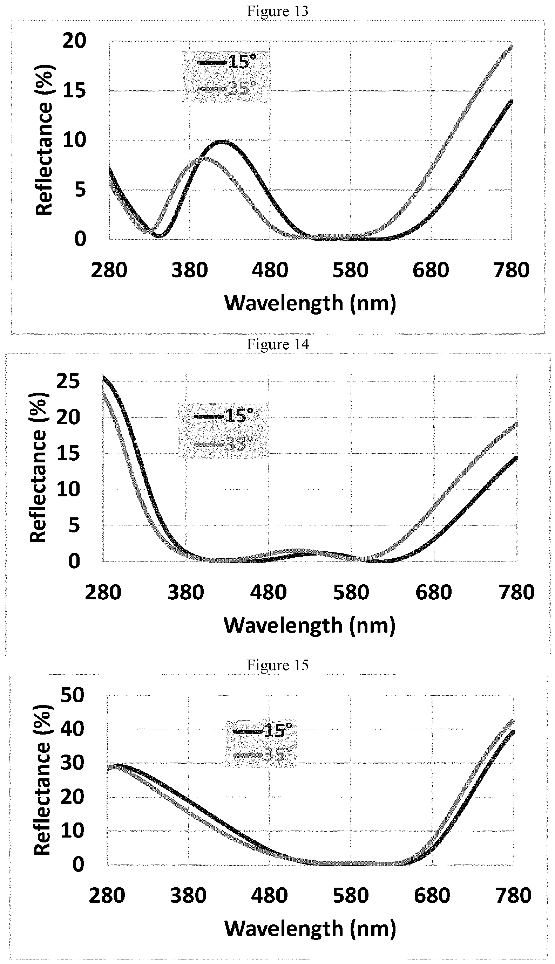

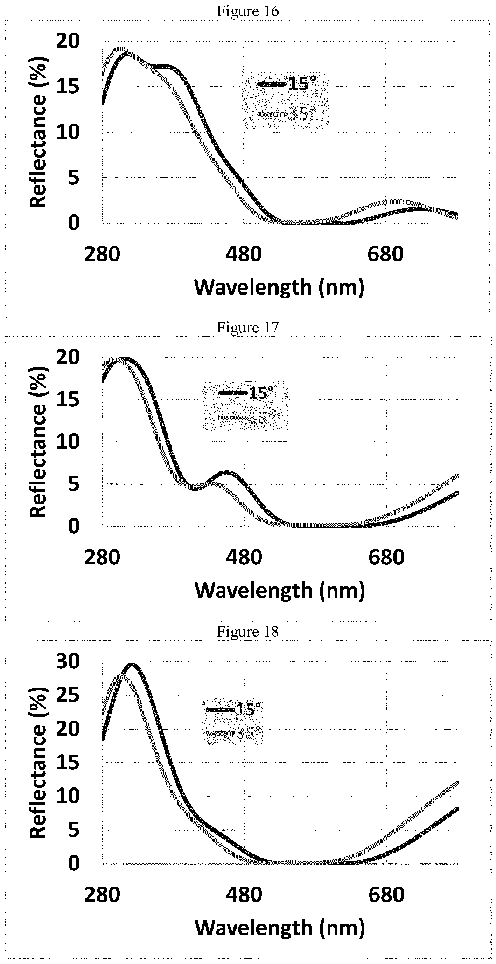

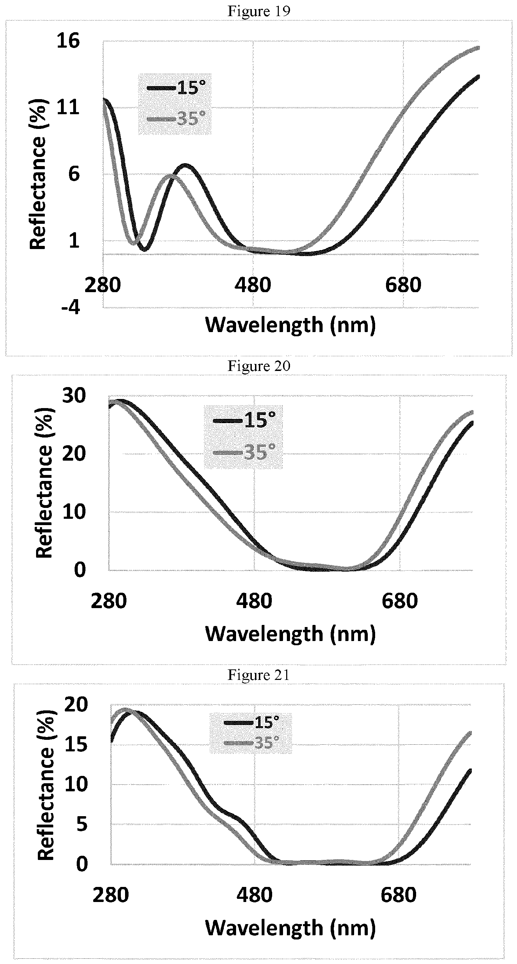

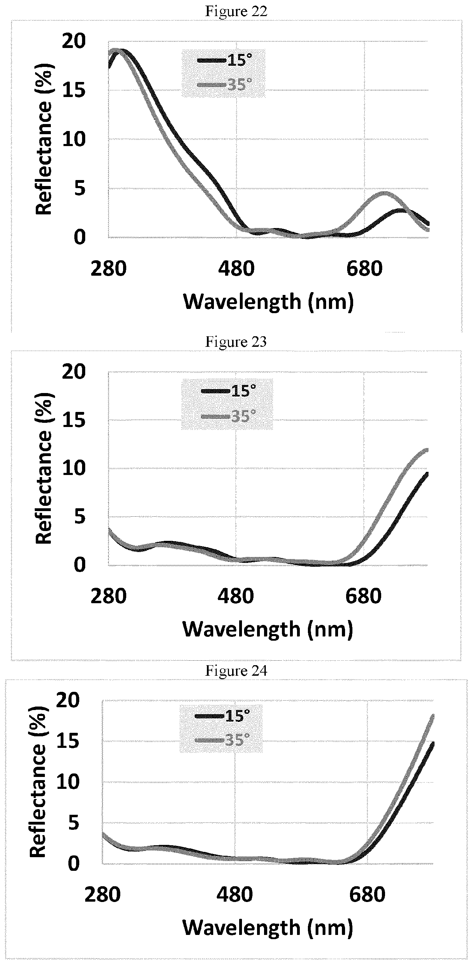

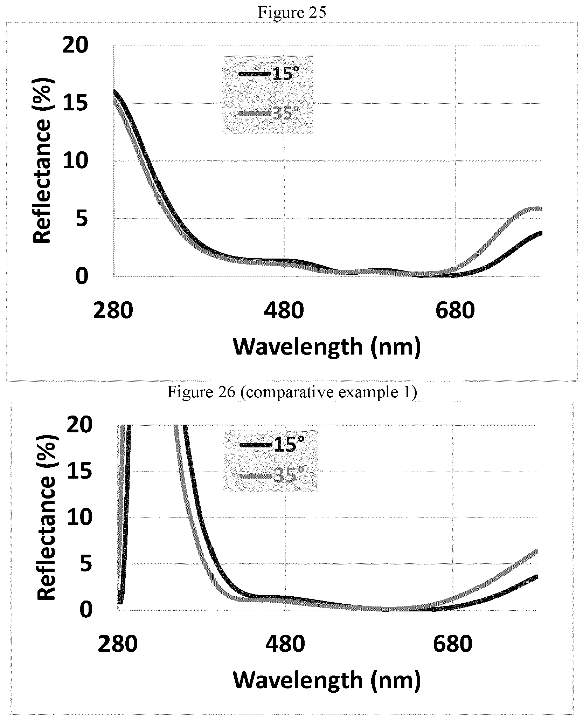

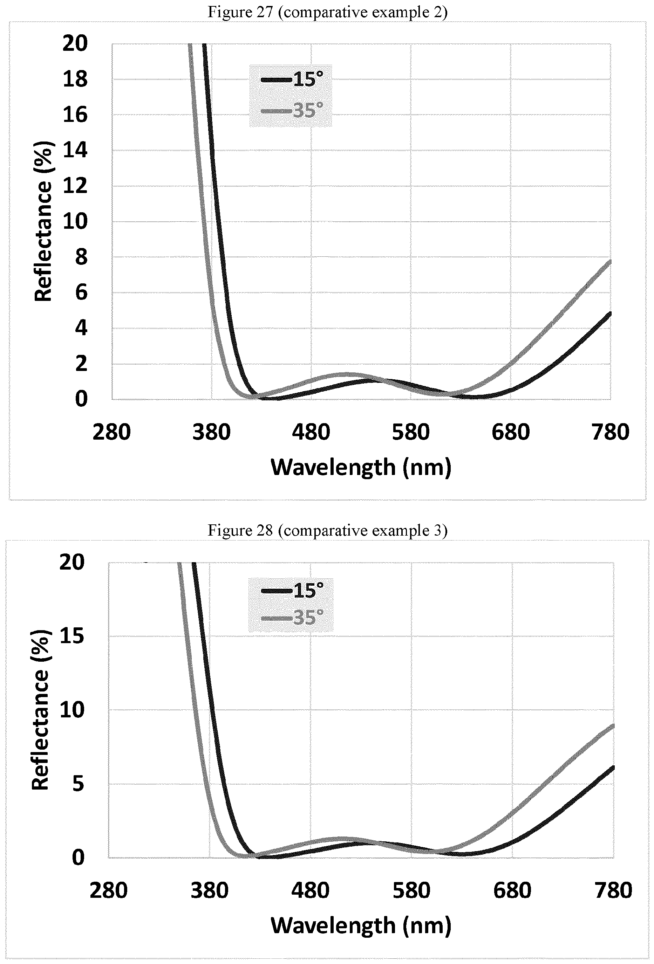

The foregoing and other objects, features and advantages of the present invention will become readily apparent to those skilled in the art from a reading of the detailed description hereafter when considered in conjunction with the accompanying drawing, wherein figures 1-25 respectively depict reflection curves between 280 and 780 nm for the enhanced interferential coatings of examples 1-25, and figures 26, 27 and 28 respectively depict reflection curves between 280 and 780 nm for the interferential coatings of comparative examples 1, 2 and 3.

Detailed description of the invention

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

When an optical article comprises one or more surface coatings, the phrase "to deposit a coating or layer onto the optical article" means that a coating or layer is deposited onto the outermost coating of the optical article, i.e., the coating which is the closest to the air.

A coating that is "on" a side of a lens is defined as a coating that (a) is positioned over that side, (b) does not need to be in contact with that side, i.e., one or more intervening coatings may be disposed between that side and the coating in question (although it is preferably in contact with that side) and (c) does not need to cover that side completely.

The term "coating" is understood to mean any layer, layer stack or film, which may be in contact with the substrate and/or with another coating, for example a sol-gel coating or a coating made of an organic resin. A coating may be deposited or formed through various methods, including wet processing, gaseous processing, and film transfer.

The term "sheet" is understood to mean a single layer (monolayer) or a bilayer, i.e., a set of two layers in direct contact with each other. When a high refractive index sheet (having a refractive index higher than 1.55) has two layers, both layers are high refractive index layers. Similarly, when a low refractive index sheet (having a refractive index lower than or equal to 1.55) has two layers, both layers are low refractive index layers.

In the present application, a layer based on a material is defined as a layer comprising at least 80 % by weight of said material, more preferably at least 90 % by weight of said material, even better consisting of a layer of said material. For example, a $ZrO_2$-based layer comprises at least 80 % by weight of $ZrO_2$.

The optical article prepared according to the present invention is preferably an optical lens or lens blank, and more preferably an ophthalmic lens or lens blank, and in particular a sun lens. The optical article may be coated on its convex main face (front side), concave main face (back/rear side), or both faces with sheets (A) to (C), the sub-layer and the multilayer interferential coating according to the invention, preferably on the convex (front) main face. As used herein, the rear face of the substrate is intended to mean the face which, when using the article, is the nearest from the wearer's eye, in the cases of ophthalmic lenses. It is generally a concave face. On the contrary, the front face of the substrate is the face which, when using the article, is the most distant from the wearer's eye. It is generally a convex face. The optical article can also be a plano article.

Herein, the term "lens" means an organic or inorganic glass lens, comprising a lens substrate, which may be coated with one or more coatings of various natures.

The term "ophthalmic lens" is used to mean a lens adapted to a spectacle frame, for example to protect the eye and/or correct the sight. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, in photography or astronomy, optical sighting lenses, ocular visors, optics of lighting systems, safety lenses, etc.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more coatings or layers.

The substrate may be made of mineral glass or organic glass, preferably organic glass. The organic glasses can be either thermoplastic materials such as polycarbonates and thermoplastic polyurethanes or thermosetting (cross-linked) materials such as diethylene glycol bis(allylcarbonate) polymers and copolymers (in particular CR-39® from PPG Industries), thermosetting polyurethanes, polythiourethanes, preferably polythiourethane resins having a refractive index of 1.60 or 1.67, polyepoxides, polyepisulfides, such as those having a refractive index of 1.74, poly(meth)acrylates and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates (PC), diethylene glycol bis(allylcarbonate) polymers and substrates obtained from thermosetting polythiourethane resins, which are marketed by the Mitsui Toatsu Chemicals company as MR series, in particular MR6®, MR7® and MR8® resins. The latter substrates as well as the monomers used for their preparation are especially described in the patents US 4,689,387, US 4,775,733, US 5,059,673, US 5,087,758 and US 5,191,055.

The interferential coating according to the invention can be associated either by coating or by lamination, to a clear substrate, i.e., a substrate having a visible light mean transmission factor Tv higher than 96%, and define with the latter or any substrate (including non clear ones) an optical article having a visible light mean transmission factor Tv preferably ranging from 96 % to 4 %, more preferably from 90% to 4%. In most cases, the resulting optical article is a colored optical article.

The Tv factor, also called relative light transmission factor in the visible spectrum, relative visible light mean transmission factor or "luminous transmission" of the system, is such as defined in the standard NF EN 1836 and relates to an average in the 380-780 nm wavelength range that is weighted according to the sensitivity of the human eye at each wavelength of the range and measured under D65 illumination conditions (daylight).

As such, the interferential coating according to the invention can be tailored so as to define, with the associated substrate, different tints of sunglasses with different visible light mean transmission factors Tv:

    ☐ above 80 %,
    ☐ from 43 to 80 % (known as sunglasses of category or class 1),
    ☐ from 18 to 43 % (known as sunglasses of class 2),
    ☐ from 8 to 18% (known as sunglasses of class 3),
    ☐ below 8 % (known as sunglasses of class 4).

Prior to depositing sheets (A) to (C), the sub-layer, the interferential coating or other functional coatings, the surface of the article is usually submitted to a physical or chemical surface activating and cleaning pre-treatment, so as to improve the adhesion of the layer to be deposited, such as disclosed in WO 2013/013929. This pre-treatment is generally performed on the surface of an abrasion- and/or scratch-resistant coating (hard coat).

This pre-treatment is generally carried out under vacuum. It may be a bombardment with energetic species, for example an ion beam method ("Ion Pre-Cleaning" or "IPC") or an electron beam method, a corona treatment, an ion spallation treatment, an ultraviolet treatment or a plasma treatment under vacuum, using typically an oxygen or an argon plasma. It may also be an acid or a base surface treatment and/or a solvent surface treatment (using water or an organic solvent) with or without ultrasonic treatment. Many treatments may be combined. Thanks to these cleaning treatments, the cleanliness of the substrate surface is optimized.

By energetic species, it is meant species with an energy ranging from 1 to 300 eV, preferably from 1 to 150 eV, and more preferably from 10 to 150 eV and most preferably from 40 to 150 eV. Energetic species may be chemical species such as ions, radicals, or species such as photons or electrons.

The interferential coating may be virtually any interferential coating conventionally used in the field of optics, in particular ophthalmic optics. The interferential coating may be, in a non-limiting manner, an anti-reflection coating, a reflective (mirror) coating such as an mirror reflecting infrared, visible or ultraviolet light, a filter in visible spectrum such as a blue cut filter or a blue pass filter, but is preferably an anti-reflection coating.

An anti-reflection coating is a coating, deposited on the surface of an article, which improves the anti-reflection properties of the final article. It reduces the reflection of light at the article/air interface over a relatively broad portion of the visible spectrum.

The multilayer interferential coating of the invention comprises a stack of at least one high refractive index layer having a refractive index higher than 1.55 and at least one low refractive index layer having a refractive index of 1.55 or less.

More preferably, the multilayer interferential coating comprises at least two layers with a low refractive index (LI) and at least two layers with a high refractive index (HI). The total number of layers in the interferential coating is preferably higher than or equal to 3, more preferably higher than or equal to 4, and preferably lower than or equal to 8 or 7, more preferably lower than or equal to 7, even more preferably lower than or equal to 5, and most preferably equal to 5 or 7 layers.

As used herein, a layer of the interferential coating (or a layer from sheets (A), (B) or (C)) is defined as having a thickness higher than or equal to 1 nm. Thus, any layer having a thickness lower than 1 nm will not be considered when counting the number of layers in the interferential coating. The sub-layer and the layers of sheets (A) to (C) either are not considered when counting the number of layers of the interferential coating or when indicating its thickness.

HI layers and LI layers do not necessarily alternate with each other in the stack, although they also may, according to one embodiment of the invention. Two HI layers (or more) may be deposited onto each other, as well as two LI layers (or more) may be deposited onto each other.

In the present application, a layer of the interferential coating is said to be a layer with a high refractive index (HI) when its refractive index is higher than 1.55, preferably higher than or equal to 1.6, even more preferably higher than or equal to 1.8 or 1.9 and most preferably higher than or equal to 2. Said HI layers preferably have a refractive index lower than or equal to 2.2 or 2.1. A layer of an interferential coating is said to be a low refractive index layer (LI) when its refractive index is lower than or equal to 1.55, preferably lower than or equal to 1.52, more preferably lower than or equal to 1.48 or 1.47. Said LI layer preferably has a refractive index higher than or equal to 1.1.

The HI layer generally comprises one or more metal oxides such as, without limitation, zirconia ($ZrO_2$), titanium dioxide ($TiO_2$), alumina ($Al_2O_3$), tantalum pentoxide ($Ta_2O_5$), neodymium oxide ($Nd_2O_5$), praseodymium oxide ($Pr_2O_3$), praseodymium titanate ($PrTiO_3$), $La_2O_3$, $Nb_2O_5$, $Y_2O_3$, SiN, $Si_3N_4$, $HfO_2$, $Ce_2O_3$, a sub-stoichiometric titanium oxide (TiOx, where x < 2, x preferably varying from 0.2 to 1.2, such as TiO, $Ti_2O_3$ or $Ti_3O_5$), a sub-stoichiometric zirconium oxide (ZrOx, where x < 2, x preferably varying from 0.2 to 1.2), a sub-stoichiometric silicon oxide (SiOx, where x < 2, x preferably varying from 0.2 to 1.2, more preferably from 0.9 to 1.1, such as SiO), a sub-stoichiometric silicon nitride (SiNy, where y < 1, y preferably varying from 0.1 to 0.6), and mixtures thereof.

The sub-stoichiometric materials listed above can show absorbing properties in the visible range, depending on the layer thickness and conditions used during their deposition.

In the present invention, a visible light-absorbing layer is defined as a layer which, when directly deposited as a monolayer onto the surface of a clear substrate (such as a polycarbonate substrate), reduces the luminous transmittance Tv of said clear substrate by at least 5 %, preferably at least 10 %, more preferably at least 20 %, by absorption, as compared to the same clear substrate without the layer in question. Absorption does not include reflection.

At least one of the layers of the multilayer interferential coating according to the invention is a layer comprising a visible light absorbing material, referred to as a "visible light-absorbing layer", "light-absorbing layer" or "absorbent layer", comprising a visible light absorbing material, i.e., one or more visible light absorbing compounds. Its function is to reduce transmission of visible light by absorption.

The absorbent layer may be any layer known to one skilled in the art and suitable for absorbing at least part of the visible light (380-780 nm).

Said layer of light absorbing material preferably has an extinction coefficient k at 550 nm higher than or equal to 0.1, 0.3 or 0.5. In one embodiment, the layer of light absorbing material has an extinction coefficient k higher than or equal to 0.1, 0.3 or 0.5 for any wavelength ranging from 400 to 800 nm. The extinction coefficient (also known as attenuation coefficient) of a particular substance, denoted k, measures the loss in energy of electromagnetic radiation traversing this medium. This is the imaginary part of the complex refractive index.

The interferential stack may comprise at least one, or at least two, or at least three absorbent layers. It preferably comprises 1 to 3 visible-light-absorbing layers.

The visible-light-absorbing layers are generally layers having a high refractive index, with a refractive index of at least 1.55, preferably at least 1.80, in particular at least 2.0.

According to the present disclosure, the composition and thickness of the light-absorbing layers can be adjusted so that the visible light mean transmission factor Tv of the optical lens preferably ranges from 96 % to 4 %. For example, the values of x or y in SiOx or SiNy layers can be varied by changing the deposition conditions (e.g., precursor gas amounts), since stoichiometric materials such as SiN and SiO$_2$ are non-light-absorbing materials in the visible range. The refractive index of sub-stoichiometric SiNy and SiOx layers is higher than that of the corresponding stoichiometric SiN and SiO$_2$ coatings. Lower values of x and/or y provide lenses with a lower transmittance Tv (the refractive index increases gradually when the layer becomes more and more deficient in nitrogen or oxygen), so do thicker light-absorbing layers.

The number of light-absorbing layers present in the interferential coating can also be controlled to adjust the value of the visible light mean transmission factor Tv within the above range. As a result, class 0 to 4 transmissions can be achieved for the resulting coated lens.

The material of the absorbent layer can be any material known in the art and affording the desired light absorption properties. For instance, the light absorbing material can be a sub-stoichiometric inorganic material having generally a refractive index higher than 1.55.

The sub-stoichiometric inorganic material can result from the reaction of oxygen and/or nitrogen with at least one metal element or metalloid element. Suitable metal and metalloid elements include Mg, Y, Ti, Zr, Hf, V, Cr, Nb, Ta, W, Zn, Al, In, Sn, Sb, Si Ge and Bi.

Non-limiting examples of sub-stoichiometric inorganic materials are a sub-stoichiometric oxide, oxynitride or nitride of a metal or metalloid such as a sub-stoichiometric titanium oxide, a sub-stoichiometric silicon oxide, a sub-stoichiometric zirconium oxide, a sub-stoichiometric silicon nitride, all of which have been defined above, NiO, TiN, a sub-stoichiometric tungsten oxide such as WO, a sub-stoichiometric titanium oxynitride, a sub-stoichiometric silicon oxynitride and any mixture thereof.

The sub-stoichiometric inorganic material can also be doped with oxides, nitrides and oxynitrides of elements such as Ti, Fe and Cu that raise the refractive index and extinction coefficient k of the material.

In a preferred embodiment, the sub-stoichiometric inorganic material is selected from SiN$_y$, SiO$_x$, TiO$_x$ and ZrO$_x$, where y < 1 and x < 2. Preferred ranges for x and y have been defined above.

In one embodiment, the multilayer interferential coating comprises at least one SiO$_x$ layer such as defined above. In another embodiment, the multilayer interferential coating comprises at least one SiNy layer such as defined above.

In one embodiment, all the high refractive index layers of the interferential coating having a thickness higher than or equal to 7 nm are visible light-absorbing layers.

In one embodiment, all the high refractive index layers of the interferential coating which are not electrically conductive (such as SnO$_2$ or ITO layers) are visible light-absorbing layers.

Optionally, the HI layers may further contain silica or other materials with a low refractive index, provided they have a refractive index higher than 1.55 as indicated hereabove. The preferred materials include ZrO$_2$, PrTiO$_3$, Nb$_2$O$_5$, Ta$_2$O$_5$, TiO$_2$, Y$_2$O$_3$, SiOx as defined above, SiNy as defined above, and mixtures thereof.

In one embodiment, the interferential coating comprises at least one Ta$_2$O$_5$-based layer.

The LI layer is also well known and may comprise, without limitation, SiO$_2$, MgF$_2$, ZrF$_4$, AlF$_3$, Na$_5$Al$_3$F$_{14}$, Na$_3$[AlF$_6$], or a mixture of silica and alumina, especially silica doped with alumina, the latter contributing to increase the interferential coating thermal resistance. The LI layer is preferably a layer comprising at least 80% by weight of silica, more preferably at least 90 % by weight of silica, relative to the layer total weight, and even more preferably consists in a silica layer.

Optionally, the LI layers may further contain materials with a high refractive index, provided the refractive index of the resulting layer is lower than or equal to 1.55.

The interferential coating external layer, i.e., its layer that is the furthest from the substrate is generally a silica-based layer, comprising at least 80 % by weight of silica, more preferably at least 90 % by weight of silica (for example a silica layer doped with alumina), relative to the layer total weight, and even more preferably consists of a silica layer.

The interferential coating innermost layer, i.e., its layer that is in direct contact with the monolayer sub-layer, is preferably a high refractive index layer.

Generally, the HI and/or LI layers have a physical thickness ranging from 5 to 250 nm, preferably from 10 to 120 nm. Their thickness may vary to a large extent, depending for instance on the desired properties for the layer, on the layer material, on the deposition technique and/or on the layer position in the stack.

Generally, the total thickness of the interferential coating plus the thickness of the sub-layer plus the thickness of sheets (A) to (C) is lower than 1 μm, preferably lower than or equal to 800 nm, more preferably lower than or equal to 500 nm and even more preferably lower than or equal to 450 nm. The interferential coating total thickness is generally higher than 100 nm, preferably higher than 200 nm, and preferably lower than 1 μm, 500 nm or 400 nm.

Moreover, the optical article has a good resistance to heat and temperature variations, i.e., a high critical temperature. In the present patent application, the critical temperature of an article is defined as being the temperature starting from which cracks appear in a coating present at the surface of the substrate (on either main face), which results in degradation of the coating, generally the interferential coating. The critical temperature of an article coated according to the invention is preferably ≥ 70°C, more preferably ≥ 75°C, 80°C, 90°C, 100°C or 110°C.

In the present invention, the multilayer interferential coating is deposited onto a monolayer sub-layer having a thickness higher than or equal to 100 nm. It should be noted that such sub-layer does not belong to the interferential coating. Said sub-layer in preferably in direct contact with the interferential coating.

As used herein, an interferential coating sub-layer or adhesion layer is intended to mean a relatively thick coating, used in order to improve mechanical properties such as abrasion resistance and/or scratch resistance of the interferential coating and/or so as to reinforce its adhesion to the substrate or to the underlying coating.

The sub-layer has a thickness that is generally lower than or equal to any one of the following values: 600 nm, 500 nm, 450 nm, 400 nm, 375 nm, 250 nm, and that is generally higher than or equal to 110 nm, more preferably higher than or equal to 120, 130, 140, 150, 160, 180, 200 or 250 nm. Increasing the thickness of the sub-layer leads to an abrasion resistance improvement.

The sub-layer is preferably a $SiO_2$-based layer, this layer comprising preferably at least 80 % by weight of silica, more preferably at least 90 % by weight of silica, relative to the layer total weight, and even more preferably consists of a silica layer. In another embodiment, this $SiO_2$-based layer is a silica layer doped with alumina, in amounts such as defined hereabove, preferably consists of a silica layer doped with alumina.

A sub-layer of an interferential coating is a category of layer that is well-identifiable and well-known to those of ordinary skill in the art, and cannot be confused with an abrasion-resistant and/or scratch-resistant coating (hard coat), described later in the present application.

In the present invention, the monolayer sub-layer is deposited onto a system of three sheets (A), (B) and (C), deposited in this order onto the optionally coated substrate. It should be noted that such sheets do not belong to the interferential coating. Said sub-layer is in direct contact with sheet (C). This system allows to improve abrasion resistance of the optical article without suffering from adhesion issues between the sub-layer and the underlying coating or the substrate.

Indeed, adhesion problems can be observed due to mechanical stresses when some means are implemented to improve the abrasion resistance of the optical article, such as increasing the thickness of the sub-layer and/or depositing the sub-layer under a low pressure, preferably without additional gas supply, so as to increase its compression/density.

The first high refractive index sheet (A), having a refractive index higher than 1.55, does not comprise any $Ta_2O_5$ layer and preferably does not comprise any $Ta_2O_5$-based layer. Sheet (A) may comprise one single high refractive index layer or two high refractive index layers in direct contact. The layer(s) of sheet (A) generally comprise(s) one or more metal oxides, which can be chosen from the metal oxides previously described for the high refractive index layers of the interferential coating. $Ta_2O_5$ can be present, but in an amount of preferably less than 80 % by weight, more preferably less than 75 %, 50 %, 25 %, 10 %, 5 %, or 1 % by weight. In one embodiment, no layer of sheet (A) comprises $Ta_2O_5$.

Sheet (A) preferably comprises a $ZrO_2$-based layer, more preferably is a $ZrO_2$-based layer. In one embodiment, sheet (A) comprises a $ZrO_2$ layer, more preferably is a $ZrO_2$ layer.

Sheet (A) preferably has a thickness lower than or equal to 120, 100 or 60 nm, more preferably lower than or equal to 50 nm, 40 nm, 30 nm, 25 nm, 20 nm or 15 nm. Sheet (A) preferably has a thickness higher than or equal to 4 nm, more preferably higher than or equal to 5 nm or 7 nm.

In one embodiment, sheet (A) comprises a high refractive index silicon-organic layer such as disclosed in WO 2017/021669, obtained by vacuum deposition, assisted by a source of ions, of at least one metal oxide and at least one organosilicon compound, such as octamethylcyclotetrasiloxane, decamethyltetrasiloxane, 2,4,6,8-tetramethylcyclotetrasiloxane, hexamethyldisiloxane, decamethylcyclopentasiloxane or dodecamethylpentasiloxane, said layer containing at least one metal oxide having a refractive index higher than or equal to 1.8, such as $ZrO_2$.

In one embodiment, sheet (A) comprises two high refractive index layers in direct contact and its high refractive index layer in direct contact with the optionally coated substrate is an adhesion layer. Said adhesion layer may comprise a metal or metal oxide selected from chromium; sub-stoichiometric silicon oxide $SiOx$ with 0.5<x<1.5, preferably 0.9<x<1.1 so as to have a refractive index larger than 1.55; and a mixture comprising chromium, silicon and oxygen, preferably chromium and silicon oxide(s) in which silicon oxides represent from 50 to 95 % by weight, preferably from 65 to 92 % by weight of said layer. Examples of commercially available materials that can be used to form said adhesion layer comprising chromium, silicon and oxygen are the materials Malbunit 8/1 (mixture of $SiO_2$ and Cr) and Flexo (mixture of SiO and Cr), provided by the Umicore Materials AG company. In this embodiment, adhesion between sheet (A) and underlying optionally coated substrate is improved and delamination occurrence (adhesive failure) is decreased.

The second low refractive index sheet (B), having a refractive index of 1.55 or less, is in direct contact with sheet (A). Sheet (B) may comprise one single low refractive index layer or two low refractive index layers in direct contact. The layer(s) of sheet (B) generally comprise(s) one or more metal oxides, which can be chosen from the metal oxides previously described for the low refractive index layers of the interferential coating.

Sheet (B) preferably comprises a $SiO_2$-based layer, more preferably is a $SiO_2$-based layer. In one embodiment, sheet (B) comprises a $SiO_2$ layer, more preferably is a $SiO_2$ layer.

In one embodiment, sheet (B) comprises a low refractive index silicon-organic layer such as disclosed in WO 2017/021669, obtained by vacuum deposition, assisted by a source of ions, of at least one organosilicon compound such as octamethylcyclotetrasiloxane, decamethyltetrasiloxane, 2,4,6,8-tetramethylcyclotetrasiloxane, hexamethyldisiloxane, decamethylcyclopentasiloxane or dodecamethylpentasiloxane.

Sheet (B) preferably has a thickness lower than or equal to 90 nm, more preferably lower than or equal to 75 nm, 70 nm, 65 nm, 60 nm or 55 nm. Sheet (B) preferably has a thickness higher than or equal to 10 nm, more preferably higher than or equal to 25 nm, 30 nm or 35 nm. Having a sufficiently thick sheet (B) is important for obtaining an improved abrasion resistance.

The thickness of sheet (B) is preferably lower than or equal to 60 nm or 55 nm when sheet (A) is in direct contact with an uncoated substrate having a refractive index of 1.55 or more or is in direct contact with a coating (typically an abrasion and/or scratch resistant coating) having a refractive index of 1.55 or more.

In one embodiment, the deposition of the layers of sheet (B) is performed in a vacuum chamber in which no supplementary gas is supplied during said deposition, which increases its density.

The third high refractive index sheet (C), having a refractive index higher than 1.55, is in direct contact with sheet (B). Sheet (C) may comprise one single high refractive index layer or two high refractive index layers in direct contact. The layer(s) of sheet (C) generally comprise(s) one or more metal oxides, which can be chosen from the metal oxides previously described for the high refractive index layers of the interferential coating, such as $Ta_2O_5$, $Nb_2O_5$, $PrTiO_3$, $ZrO_2$ and $Y_2O_3$.

In one embodiment, sheet (C) does not comprise any $Ta_2O_5$ layer, preferably any $Ta_2O_5$-based layer. In another embodiment, $Ta_2O_5$ is present in a layer of sheet (C) in an amount of less than 80 % by weight, preferably less than 75 %, 50 %, 25 %, 10 %, 5 %, or 1 % by weight. In one embodiment, no layer of sheet (C) comprises $Ta_2O_5$.

Sheet (C) preferably comprises a $ZrO_2$-based layer, more preferably is a $ZrO_2$-based layer. In one embodiment, sheet (C) comprises a $ZrO_2$ layer, more preferably is a $ZrO_2$ layer.

Sheet (C) preferably has a thickness lower than or equal to 95 nm, more preferably lower than or equal to 50 nm, 40 nm, 30 nm, 25 nm, 20 nm or 15 nm. In one embodiment, these thickness requirements are simultaneously satisfied by sheets (A) and (C). Sheet (A) preferably has a thickness higher than or equal to 4 nm, more preferably higher than or equal to 5 nm, 7 nm or 10 nm.

In one embodiment, sheet (C) comprises a high refractive index silicon-organic layer such as disclosed in WO 2017/021669, obtained by vacuum deposition, assisted by a source of ions, of at least one metal oxide and at least one organosilicon compound, such as octamethylcyclotetrasiloxane, decamethyltetrasiloxane, 2,4,6,8-tetramethylcyclotetrasiloxane, hexamethyldisiloxane, decamethylcyclopentasiloxane or dodecamethylpentasiloxane, said layer containing at least one metal oxide having a refractive index higher than or equal to 1.8, such as $ZrO_2$.

The total thickness of sheets (A), (B) and (C) preferably ranges from 40 to 200 nm, more preferably from 45 to 175 nm or from 50 to 150 nm.

The refractive indexes of sheets (A) and (C) can be independently chosen from the refractive indexes previously described for the high refractive index layers of the interferential coating. The refractive index of sheet (B) can be chosen from the refractive indexes previously described for the low refractive index layers of the interferential coating.

The total number of layers of the system of sheets (A) to (C) ranges from 3 to 6, more preferably from 3 to 4 or 5, and is ideally equal to three. In other words, sheets (A) and/or (B) and/or (C) are preferably monolayers. This system preferably comprises, in the direction moving away from the substrate, a $ZrO_2$-based layer, a $SiO_2$-based layer, and a $ZrO_2$-based layer, more preferably consists of a $ZrO_2$-based layer, a $SiO_2$-based layer, and a $ZrO_2$-based layer. This system preferably comprises, in the direction moving away from the substrate, a $ZrO_2$ layer, a $SiO_2$ layer, and a $ZrO_2$ layer, more preferably consists of a $ZrO_2$ layer, a $SiO_2$ layer, and a $ZrO_2$ layer.

Optionally, the exposed surface of the sub-layer may be submitted, prior to depositing the first layer of the interferential coating, to a physical or a chemical activation treatment which may be selected from the pre-treatments the substrate may undergo prior to depositing the sub-layer and which have already been mentioned hereabove. The preferred pre-treatment is an ion bombardment, for example by using an ion gun-generated argon ion beam. Such physical or chemical activation treatments (preferably an ionic bombardment treatment) may also be performed on the exposed surface of one or more layer(s) of the multilayer interferential coating, prior to depositing the subsequent layer of said multilayer interferential coating.

The optical article of the invention may be made antistatic, that is to say not to retain and/or develop a substantial static charge, by incorporating at least one electrically conductive layer into the stack present on the surface of the article, preferably in the interferential coating.

The ability for a lens to evacuate a static charge obtained after rubbing with a piece of cloth or using any other procedure to generate a static charge (charge applied by corona...) may be quantified by measuring the time it takes for said charge to dissipate. Thus, antistatic lenses have a discharge time of about a few hundred milliseconds, preferably 500 ms or less, whereas it is of about several tens of seconds for a static lens. In the present application, discharge times are measured according to the method exposed in the French application FR 2943798.

As used herein, an "electrically conductive layer" or an "antistatic layer" is intended to mean a layer which, due to its presence on the surface of a substrate, decreases the ability of the optical article to attract dust/particles due to charge accumulation. Preferably, when applied onto a non-antistatic substrate (i.e., having a discharge time higher than 500 ms), the antistatic layer enables the optical article not to retain and/or develop a substantial static charge, for example to have a discharge time of 500 ms or less after a static charge has been applied onto the surface thereof, so that small dust is prevented from adhering to the optical article due to prevention of static effects.

The electrically conductive layer may be located at various places in the stack, generally in or in contact with the interferential coating, provided that the reflective or anti-reflective properties thereof are not affected. It is preferably located between two layers of the interferential coating, and/or is preferably adjacent to a layer with a high refractive index of such interferential coating. In an embodiment, the electrically conductive layer is located immediately under a layer with a low refractive index of the interferential coating, most preferably is the penultimate layer of the interferential coating by being located immediately under the LI external layer of the interferential coating.

In one embodiment, the electrically conductive layer is in direct contact with two layers having a refractive index of 1.55 or less, and said electrically conductive layer is preferably located in penultimate position of the interferential coating in the direction moving away from the substrate.

The electrically conductive layer should be thin enough not to alter the transparency of the interferential coating. The electrically conductive layer is preferably made from an electrically conductive and highly transparent material, generally an optionally doped metal oxide. In this case, the thickness thereof preferably ranges from 1 to 15 nm, more preferably from 1 to 10 nm, ideally from 2 to 8 nm. Preferably, the electrically conductive layer comprises an optionally doped metal oxide, selected from indium, tin, zinc oxides and mixtures thereof. Indium-tin oxide ($In_2O_3$:Sn, tin-doped indium oxide, noted ITO), aluminum-doped zinc oxide (ZnO:Al), indium oxide ($In_2O_3$) and tin oxide ($SnO_2$) are preferred. In a most preferred embodiment, the electrically conductive and optically transparent layer is an $SnO_2$ layer.

Generally, the electrically conductive layer contributes, within the stack, but in a limited manner because of its low thickness, to obtaining interferential properties and typically represents a layer with a high refractive index in said coating. This is the case for those layers made from an electrically conductive and highly transparent material such as ITO or $SnO_2$ layers. Accordingly, when it is present, the electrically conductive layer is preferably the outermost high refractive index layer of the interferential coating, or one of the outermost high refractive index layers of the interferential coating when it is adjacent to one or more high refractive index layers.

The electrically conductive layer may be deposited according to any suitable method, for example by vacuum evaporation deposition, preferably ion-beam-assisted (IAD, described below) to increase its transparence, or by means of cathode sputtering.

The electrically conductive layer may also be a very thin layer of a noble metal (Ag, Au, Pt, etc.) typically smaller than 1 nm in thickness and preferably less than 0.5 nm in thickness.

The various layers of the interferential coating, the sub-layer, and sheets (A) to (C) are preferably deposited by vapor phase deposition, under vacuum, according to any of the following methods: i) by evaporation, optionally under ion beam assistance; ii) by ion-beam spraying; iii) by cathode sputtering; iv) by plasma-assisted chemical vapor deposition. These various methods are described in the following references "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for coating heat-sensitive substrates such as organic glasses.

The light absorbing layers, when comprising a sub-stoichiometric inorganic material, can be formed according to known methods. The sub-stoichiometry of the material can be obtained thanks to physical vapor deposition or chemical vapor deposition of a precursor material, typically by magnetron sputtering.

For example, a SiNy layer may be deposited by magnetron sputtering of a silicon target in an atmosphere comprising a mixture of $N_2$ and argon with a predetermined $N_2$/Ar flow rate ratio. In another embodiment, a $SiO_x$ layer may be deposited by magnetron sputtering of a silicon target in an atmosphere comprising a mixture of $O_2$ and argon with a predetermined $O_2$/Ar flow rate ratio. The value of Tv of the final article depends on the value of such ratios.

The above-mentioned silicon target is a non-limiting example of a source material for depositing the $SiN_x$ and/or $SiO_x$ visible-light absorbing materials.

In a thin film deposition process by magnetron sputtering, the source material may be a solid block and is referred to as a sputtering target. By way of non-limiting example, the sputtering target may be a pure silicon disk.

In one embodiment, during the deposition process, high energy argon plasma is generated and bombards the Si target surface. As a result, Si atoms or clusters are kicked out by the high energy $Ar^+$ ions from the Si target and are then deposited onto the substrate surface to form a layer or thin film.

During the sputtering process, if nitrogen or oxygen gas is introduced into the deposition chamber, silicon nitride or silicon oxide material will be deposited.

If a sufficient amount of nitrogen or oxygen is introduced, optically transparent SiN or $SiO_2$ materials with a stoichiometric composition can be deposited.

According to the present disclosure, on the other hand, as long as an insufficient amount of nitrogen or oxygen is introduced, optically absorptive $SiN_y$ (with y<1) or $SiO_x$ (with x<2) materials with a sub-stoichiometric composition can be deposited.

In another embodiment, a low-temperature plasma CVD method is used to deposit the visible-light absorbing layers. As the raw material gas, silane gas (monosilane, dichlorosilane or the like) and hydrogen gas, nitrogen gas, oxygen gas or ammonium gas are mixed in a sample chamber at a predetermined flow rate ratio so that, for example, SiOx and/or SiNy layers are formed.

More details concerning the deposition of light-absorbing layers and the influence of the different deposition parameters on the properties of said layers can be found in European application n° 20315205.3, in the name of the Applicant.

A treatment step with energetic species such as previously defined may also be carried out, simultaneously whilst depositing one or more of the various layers of the interferential coating, sub-layer, or sheets (A) to (C). In particular, working under ion assistance enables to pack said layers while they are being formed, and increases their compression and refractive index. The use of ion assistance during the deposition of a layer produces a layer that is structurally different from a layer deposited without ion assistance.

The ion assisted deposition method or IAD is notably described in US patent application 2006/017011 and in US patent 5268781. Vapor phase deposition under ion assistance comprises depositing onto a substrate a layer of material by simultaneously bombarding by means of an ion beam said layer while it is being formed, and preferably under ion bombardment achieved by means of an ion gun. The ion bombardment leads to an atomic rearrangement in the coating being formed, which increases its density. The IAD not only allows an improvement of the deposited layer adhesion, but also an increase in their refractive index. The IAD operation may be performed by means of an ion gun, where ions are particles composed of gas atoms from which one or more electron(s) is or are extracted. It does preferably consist of bombarding the surface to be treated with oxygen ions. Other ionized gases may be used, either combined with oxygen, or not, for example argon, nitrogen, in particular a mixture of $O_2$ and argon according to a volume ratio ranging from 2:1 to 1:2.

The outermost low refractive index layer(s) of the interferential coating is (are) preferably deposited without ionic assistance, preferably without concomitant treatment with energetic species. In another embodiment, the low refractive index layers of the interferential coating and/or the sub-layer are (is) deposited without ionic assistance, preferably without concomitant treatment with energetic species.

In one embodiment, no layer of the interferential coating is deposited under ion assistance (preferably no layer of the interferential coating is deposited under concomitant treatment with energetic species), except the electrically conductive layer(s), if present in the interferential coating.

In another embodiment, at least one HI layer of the interferential coating is deposited under ion assistance, such as an electrically conductive layer or a $Ta_2O_5$ layer, if present in the interferential coating.

Optionally, the deposition of one or more of the layers is performed by supplying (a supplementary) gas during the deposition step of the layer in a vacuum chamber, such as disclosed in US 2008/206470. Concretely, an additional gas such as a rare gas, for example argon, krypton, xenon, neon; a gas such as oxygen, nitrogen, or mixtures of two gases or more amongst these, is or are introduced into the vacuum deposition chamber while the layer is being deposited. The gas employed during this deposition step is not an ionized gas, more preferably not an activated gas.

This gas supply makes it possible to regulate the pressure and differs from an ionic bombardment treatment, such as ion assistance. It generally enables the limitation of stress in the interferential coating and to reinforce the adhesion of the layers. When such deposition method is used, which is called deposition under gas pressure regulation, it is preferred to work under an oxygen atmosphere (so called "passive oxygen"). The use of an additional gas supply during the deposition of a layer produces a layer that is structurally different from a layer deposited without additional gas supply.

In an embodiment of the invention, the deposition of the sub-layer is performed in a vacuum chamber under a pressure lower than $1.6 \times 10^{-4}$ mBar, preferably lower than $10^{-4}$ mBar, more preferably lower than $8.10^{-5}$ mBar.

In a preferred embodiment of the invention, the deposition of the sub-layer is performed in a vacuum chamber in which no supplementary gas is supplied during said deposition. It has been found that depositing the sub-layer under a low pressure, and ideally without gas supply to obtain a still lower pressure, leads to a sub-layer with a lower porosity, a higher compression and density, and an increase of the abrasion resistance of the optical article.

In another embodiment, the outermost high refractive index layer(s) of the interferential coating, except the electrically conductive layers, if present in outermost position, is (are) deposited in a vacuum chamber in which at least one supplementary gas is supplied during said deposition. In another embodiment, the high refractive index layer(s) of the interferential coating, except the electrically conductive layer(s), if present in outermost position, is (are) deposited in a vacuum chamber in which at least one supplementary gas is supplied during said deposition.

According to a particularly preferred embodiment, the optical article comprises, starting from the surface of the substrate optionally coated with one or more functional coatings such as a primer coating and/or a hard coat, a high refractive index layer (which is not a $Ta_2O_5$ layer) having a thickness ranging from 3 to 150 nm, more preferably from 4 to 120 nm, preferably of zirconia (sheet (A)), a low refractive index layer having a thickness ranging from 5 to 120 nm, preferably from 8 to 100 nm, preferably of silica (sheet (B)), a high refractive index layer having a thickness ranging from 4 to 120 nm, preferably from 5 to 100 nm, preferably of zirconia (sheet (C)), a sub-layer having a thickness of from 100 to 300 nm, more preferably from 110 to 250 nm, preferably a silica-based sub-layer, and a light-absorbing interferential coating, preferably an anti-reflective coating, containing in the following order, a high refractive index with a thickness of from 4 to 175 nm, preferably of from 5 to 150 nm, preferably of zirconia, SiOx, SiNy or $Ta_2O_5$, a layer with a low refractive index with a thickness of from 4 to 120 nm, preferably of from 5 to 100 nm, preferably of silica, a layer with a high refractive index with a thickness of from 5 to 230 nm, preferably of from 6 to 170 nm, preferably of SiOx or SiNy, optionally an electrically conductive layer with a thickness of from 3 to 15 nm, preferably of from 4 to 8 nm, preferably made of tin oxide or ITO, and a layer with a low refractive index with a thickness of from 50 to 150 nm, preferably of from 55 to 105 nm, preferably of silica.

In an alternative embodiment, the optical article comprises, rather than the light-absorbing interferential coating described in the previous paragraph, a light-absorbing interferential coating, preferably an anti-reflective coating, containing in the following order, a high refractive index with a thickness of from 60 to 175 nm, preferably of from 70 to 160 nm, preferably of SiOx, SiNy or $Ta_2O_5$, a layer with a low refractive index with a thickness of from 4 to 50 nm, preferably of from 5 to 30 nm, preferably of silica, a layer with a high refractive index with a thickness of from 75 to 150 nm, preferably of from 80 to 130 nm, preferably of SiOx or SiNy, a layer with a low refractive index with a thickness of from 10 to 40 nm, preferably of from 15 to 35 nm, preferably of silica, a layer with a high refractive index with a thickness of from 4 to 25 nm, preferably of from 5 to 18 nm, preferably of SiOx or SiNy, optionally an electrically conductive layer with a thickness of from 3 to 15 nm, preferably of from 4 to 8 nm, preferably made of tin oxide or ITO, and a layer with a low refractive index with a thickness of from 40 to 100 nm, preferably of from 50 to 90 nm, preferably of silica.

The interferential coating / sub-layer / sheets (A) to (C) system may be deposited directly onto a bare substrate. In some applications, it is preferred that the main surface of the substrate be coated with one or more functional coatings improving its optical and/or mechanical properties, prior to depositing the interferential coating of the invention. These functional coatings traditionally used in optics may be, without limitation, an impact-resistant primer layer, an abrasion- and/or scratch-resistant coating (hard coat), a polarized coating, an antistatic coating, a photochromic coating, a tinted coating or a stack made of two or more of such coatings. In this embodiment, at least one functional coating is interleaved between the substrate and sheet (A).

The impact-resistant primer coating which may be used in the present invention can be any coating typically used for improving impact resistance of a finished optical article. By definition, an impact-resistant primer coating is a coating which improves the impact resistance of the finished optical article as compared with the same optical article but without the impact-resistant primer coating.

Typical impact-resistant primer coatings are (meth)acrylic based coatings and polyurethane based coatings. In particular, the impact-resistant primer coating according to the invention can be made from a latex composition such as a poly(meth)acrylic latex, a polyurethane latex or a polyester latex.

Preferred primer compositions include compositions based on thermoplastic polyurethanes, such as those described in the patents JP 63-141001 and JP 63-87223, poly(meth)acrylic primer compositions, such as those described in the patents US 5,015,523 and US 6,503,631, compositions based on thermosetting polyurethanes, such as those described in the patent EP 0404111 and compositions based on poly(meth)acrylic latexes or polyurethane latexes, such as those described in the patents US 5,316,791 and EP 0680492. Preferred primer compositions are compositions based on polyurethanes and compositions based on latexes, in particular polyurethane latexes, poly(meth)acrylic latexes and polyester latexes, as well as their combinations. In one embodiment, the impact-resistant primer comprises colloidal fillers.

Poly(meth)acrylic latexes are latexes based on copolymers essentially made of a (meth)acrylate, such as for example ethyl (meth)acrylate, butyl (meth)acrylate, methoxyethyl (meth)acrylate or ethoxyethyl (meth)acrylate, with at least one other co-monomer in a typically lower amount, such as for example styrene.

Commercially available primer compositions suitable for use in the invention include the Witcobond® 232, Witcobond® 234, Witcobond® 240, Witcobond® 242 compositions (marketed by BAXENDEN CHEMICALS), Neorez® R-962, Neorez® R-972, Neorez® R-986 and Neorez® R-9603 (marketed by ZENECA RESINS), and Neocryl® A-639 (marketed by DSM coating resins).

The thickness of the impact-resistant primer coating, after curing, typically ranges from 0.05 to 30 $\mu$m, preferably 0.2 to 20 $\mu$m and more particularly from 0.5 to 10 $\mu$m, and even better 0.6 to 5 $\mu$m or 0.6 to 3 $\mu$m, and most preferably 0.8 to 1.5 $\mu$m.

The impact-resistant primer coating is preferably in direct contact with an abrasion- and/or scratch-resistant coating. In one embodiment, its refractive index ranges from 1.45 to 1.55. In another embodiment, its refractive index is higher than or equal to 1.55.

The abrasion- and/or scratch-resistant coating may be any layer traditionally used as an anti-abrasion and/or anti-scratch coating in the field of optical lenses. When present, it is generally located under the first high refractive index sheet (A) and in direct contact with it.

The abrasion- and/or scratch-resistant coatings are preferably hard coatings based on poly(meth)acrylates or silanes, generally comprising one or more mineral fillers intended to increase the hardness and/or the refractive index of the coating once cured.

Abrasion- and/or scratch-resistant coatings are preferably prepared from compositions comprising at least one alkoxysilane and/or a hydrolyzate thereof, obtained for example through hydrolysis with a hydrochloric acid solution and optionally condensation and/or curing catalysts.

Suitable coatings that are recommended for the present invention include coatings based on epoxysilane hydrolyzates such as those described in the patents EP 0614957, US 4211823 and US 5015523.

A preferred abrasion- and/or scratch-resistant coating composition is the one disclosed in the patent EP 0614957, in the name of the applicant. It comprises a hydrolyzate of epoxy trialkoxysilane and dialkyl dialkoxysilane, colloidal silica and a catalytic amount of an aluminum-based curing catalyst such as aluminum acetylacetonate, the rest being essentially composed of solvents traditionally used for formulating such compositions. Preferably, the hydrolyzate used is a hydrolyzate of $\gamma$-glycidoxypropyltrimethoxysilane (GLYMO) and dimethyldiethoxysilane (DMDES).

The abrasion- and/or scratch-resistant coating composition may be deposited by known methods and is then cured, preferably using heat or ultraviolet radiation. The thickness of the (cured) abrasion- and/or scratch-resistant coating does generally vary from 2 to 10 $\mu$m, preferably from 3 to 5 $\mu$m.

The optical article according to the invention may also comprise coatings formed on the interferential coating and capable of modifying the surface properties thereof, such as a hydrophobic and/or oleophobic coating (antifouling top coat). These coatings are preferably deposited onto the outer layer of the interferential coating. Generally, their thickness is lower than or equal to 10 nm, does preferably range from 1 to 10 nm, more preferably from 1 to 5 nm. Antifouling top coats are generally coatings of the fluorosilane or fluorosilazane type, preferably comprising fluoropolyether moieties and more preferably perfluoropolyether moieties. More detailed information on these coatings is disclosed in WO 2012076714.

Instead of a hydrophobic coating, a hydrophilic coating may be used which provides anti-fog properties (anti-fog coating), or a precursor of an anti-fog coating which provides anti-fog properties when associated with a surfactant. Examples of such anti-fog precursor coatings are described in the patent application WO 2011/080472.

The additional coatings such as primers, hard coats and antifouling top coats may be deposited onto a main face of the substrate using methods known in the art, including spin-coating, dip-coating, spray-coating, evaporation, sputtering, chemical vapor deposition and lamination.

Typically, an optical article according to the invention comprises a substrate that is successively coated with an impact-resistant primer layer, an anti-abrasion and/or scratch-resistant layer, sheets (A) to (C), a sub-layer and a light-absorbing interferential coating according to the invention, and a hydrophobic and/or oleophobic coating, or a hydrophilic coating which provides anti-fog properties, or an anti-fog precursor coating.

Due to the presence of sheets (A) to (C), the sub-layer and interferential coating according to the invention (as an example an antireflective coating), the optical articles of the invention exhibit a high value of abrasion resistance measured according to the Bayer ASTM (Bayer sand) operating protocol described hereafter, i.e., in accordance with the ASTM F735-81 standard. For Bayer ASTM measurement, the coated face has to be convex. In the examples, when a coating is deposited on a concave face, the Bayer ASTM value is the measurement made on the same coating (sheets (A) to (C), sub-layer and interferential coating) but deposited on a convex face.

According to the present invention, the optical article, the main face of which, preferably the front face, is covered by the interferential stack of the invention, exhibits a Bayer value measured in accordance with the ASTM F735-81 standard (sand Bayer value) higher than 5.5, preferably higher than any one of the following value: 6, 6.5, 7, 7.5, 8, 9, 10, 11. Thus, the present invention provides optical articles with a high abrasion resistance, since typical sand Bayer values for optical articles are around 5. Such values can be obtained by controlling the thickness of the sub-layer and sheets (A) to (C), in particular sheet (B), and/or the deposition parameters, in particular the pressure during the deposition of the sub-layer.

In one embodiment, the optical article is a lens and the interferential coating, sheets (A) to (C) and the sub-layer are applied on the front main face of the lens and/or the rear main face of the lens, preferably the front main face of the lens.

In another embodiment, the optical article is a lens and the interferential coating, sheets (A) to (C) and the sub-layer are applied on the front main face of the lens or the back main face), and the back main face of the lens (or the front main face) is coated with an interferential coating, preferably an antireflection coating, which is identical to or different from the interferential coating of the other face, optionally with a sub-layer, which is identical to or different from the sub-layer of the other face, optionally with sheets (A) to (C), which are identical to or different from sheets (A) to (C) of the other face, and optionally with an impact resistant primer coating and/or an abrasion- and/or scratch-resistant coating, which are identical to or different from those of the other face. Obviously, the layers of the back face are stacked in an order that is similar to the front face.

The present absorptive interferential coatings can be directly used for sunglass production on any kind of substrates, without the need of substrate or coating tinting, thus simplifying the production process. Additionally, the transmittance of the coated optical article can be flexibly controlled from class 0 to class 4.

The visible light-absorbing performances can be combined with other optical performances such as high or low reflection in the UV range, high or low reflection in the visible range, multiangular efficiency in reflection, e.g., low visual reflection of visible light over a wide range of angles of incidence, by using the inventive interferential coating on one main face of the substrate, or identical or different inventive interferential coatings on both faces of the substrate.

In one embodiment, the optical lens of the invention is configured to reduce reflection in the UVA- and UVB-radiation ranges (respectively 315-380 nm and 280-315 nm) on the rear face, so as to allow the best health protection against UV light.

It is advisable for a spectacle wearer to wear before each of both eyes an ophthalmic lens that strongly reduces reflection on the rear face in the UVA- and UVB-radiation ranges, which are particularly harmful to the retina. Such lenses may also provide increased visual performance due to increased contrast sensitivity.

Reflecting UV light is not really problematic on the front face of the lens, since the major part of the UV radiation which comes from the front of the wearer and might attain the wearer's eye (normal incidence, 0 to 15°) generally gets absorbed by the ophthalmic lens substrate. On the other hand, the UV radiation resulting from light sources located behind the wearer may reflect on the lens rear face and reach the wearer's eye if the lens is not provided with an antireflective coating which is efficient in the ultraviolet region, thus potentially affecting the wearer's health. It is observed that the light rays that may reflect onto the lens rear face and reach the wearer's eye have a narrow incidence angle range, ranging from 30 to 45° (oblique incidence).

In this regard, the mean reflection factor Ruv on the rear (back) main face of the substrate between 280 nm and 380 nm, weighted by the function $W(\lambda)$ defined in the ISO 13666:1998 standard, is preferably lower than 10 % or 5 %, preferably lower than 4.5 %, more preferably lower than or equal to 4 %, even better lower than or equal to 3 %, at an angle of incidence of 35°. These performances can be obtained through the use of an antireflection coating deposited onto the rear main face of the lens.

The mean reflection factor $R_{UV}$ on the front main face of the substrate between 280 nm and 380 nm, weighted by the function $W(\lambda)$ defined in the ISO 13666:1998 standard, is preferably higher than 5 %, preferably higher than 10 %, at an angle of incidence of 15° (UV mirror coating).

In one embodiment, the interferential coating according to the invention is a colored mirror coating, i.e., the mirror coating has a predetermined color. The color of the mirror can be designed in a very flexible manner, so that it may show at least one predetermined color, said color corresponding to wavelengths in the visible wavelength range, including blue and/or green and/or gold and/or purple and/or pink and/or red and/or any other desired color or mixture of colors.

Said mean reflection factor Ruv is defined through the following relation:

$$R_{UV} = \frac{\int\limits_{280}^{380} W(\lambda).R(\lambda).d\lambda}{\int\limits_{280}^{380} W(\lambda).d\lambda}$$

wherein $R(\lambda)$ represents the lens spectral reflection factor at a given wavelength, and $W(\lambda)$ represents a weighting function equal to the product of the solar spectrum irradiance $Es(\lambda)$ and the efficiency relative spectral function $S(\lambda)$.

The spectral function $W(\lambda)$, enabling to calculate the ultraviolet radiation transmission factors, is defined according to the ISO 13666:1998 standard. It makes it possible to express the ultraviolet solar radiation distribution tempered by the relative spectral efficiency of such radiation for a user, since it simultaneously takes both the solar spectral energy $Es(\lambda)$ into account, which does globally emit less UVB-rays as compared to UVA-rays, and the spectral efficiency $S(\lambda)$, UVB-rays being more harmful than UVA-rays. The values for those three functions in the ultraviolet region are given in the table disclosed in ISO 13666:1998 standard (which is reproduced at page 6 of the publication WO 2012/076714).

Ruv is measured in the present application at an angle of incidence of 35° for the back main face and at an angle of incidence of 15° for the front main face. Calculation examples of Ruv for angles of incidence at 30° and 45° are given in WO 2012/076714. A person skilled in the art can easily implement calculation based on reflection values measured on the respective faces at the desired incidence angle (15°, 35°).

The "mean light reflection factor," noted $R_v$, also called "luminous reflection", is such as defined in the ISO 13666:1998 standard, and measured in accordance with the ISO 8980-4 standard (for an angle of incidence lower than 17°, typically of 15°), i.e., this is the weighted spectral reflection average over the whole visible spectrum between 380 and 780 nm. It may be measured for all incidence angles $\theta$, thus defining a function Rv($\theta$).

The mean light reflection factor $R_v$ of an anti-reflection coating according to the invention is preferably lower than or equal to 2.5%, more preferably lower than or equal to 2% or 1%, even more preferably $\leq$ 0.85 %. These requirements are also preferably satisfied by the face of the lens coated with an anti-reflection coating according to the invention.

Otherwise, if the mean light reflection factor $R_v$ of the interferential coating is higher than 2.5%, the coating is referred to as a highly reflective coating or "mirror" coating.

In one embodiment of the invention, the mean light reflection factor as a function of incident angle $R_v(\theta)$ on at least one main face has a minimum value $R_{vmin}$ for an angle of incidence $\theta_{min}$ comprised in the range [20°-50°] and $R_{vmin}$ / $R_v(15°)$ < 0.95, preferably $R_{vmin}$/ $R_v(15°)$ < 0.90, $R_v(15°)$ being the mean light reflection factor for an angle of incidence $\theta$ of 15° on said main face, defined in the ISO 13666:1998 standard.

When the above requirement is satisfied, the optical lenses of the invention are especially adapted to reduce reflection of visible light coming from all directions, i.e., over a wide range of angles of incidence on the optical lens. It is particularly interesting to have an antireflection coating having low reflection $R_v(\theta)$ on a broad angular range, typically [0°-45°] and preferably [0°-50°]. In the case of an ophthalmic lens, both the wearer and observer benefit from this improvement.

From the observer's point of view, the benefits of multiangular efficiency are mainly aesthetic. The front and side mirror effect are decreased, leading to the ability to have a better vision of the eyes of the wearer whether the observer is located in front of the wearer or on a lateral position. The observer is also less troubled by reflections when moving from one side of the wearer to the other.

From the wearer's point of view, decreasing reflection of light rays comprised in an incident angle range of [30°-45°] is crucial, as light having such angles of incidence generates reflection from the back side of the lens and discomfort.

In an embodiment, the optical lens according to the invention is coated on both faces (front and rear main faces) with such interferential coatings. Coatings may be identical or different. In particular, the coating on the rear main face of the lens may present simultaneously a mean light reflection factor as a function of incident angle Rv($\theta$) with a minimum value $R_{vmin}$ for an angle of incidence $\theta_{min}$ comprised in the range [20°-50°] and $R_{vmin}$ / $R_v(15°)$ < 0.95, preferably $R_{vmin}$ / $R_v(15°)$ < 0.90, $R_v(15°)$ being the mean light reflection factor for an angle of incidence $\theta$ of 15°, and a mean reflection factor Ruv between 280 nm and 380 nm, weighted by the function W($\lambda$) defined in the ISO 13666:1998 standard lower than 10 %.

In each of these embodiments, the total number of layers in the interferential coating, preferably an antireflection coating, is preferably higher than or equal to 3, preferably lower than or equal to 7 or 5, and/or the total thickness of the interferential coating (preferably an antireflective coating) plus the thickness of the sub-layer plus the thickness of sheets (A) to (C) is preferably lower than 1 micrometer, more preferably lower than or equal to 800 nm or 500 nm.

The colorimetric coefficients C* and h of the optical article of the invention in the international colorimetric CIE L*a*b* are calculated between 380 and 780 nm, taking the standard illuminant D65 and the observer into account (angle of incidence: 15°). The observer is a "standard observer" (10°) as defined in the international colorimetric system CIE L*a*b*.

It is possible to design interferential coatings without limitation as regards their hue angle (h), which relates to the residual color displayed by said interferential coating (color of the reflected light), and preferably ranges from 40° to 355°, more preferably from 100° to 300°. In some embodiments, the optical article has a hue angle (h) ranging from 240° to 300°, preferably from 250° to 290°, more preferably from 260° to 280°, thus resulting in a perceived residual reflected color blue to violet, preferably close to violet. In another embodiment, the optical article has a hue angle (h) higher than or equal to 135°, more preferably higher than or equal to 140° and better ranging from 140° to 160°, thus resulting in an interferential coating having a green reflection. In another embodiment, the optical article has a hue angle (h) ranging from 40° to 90°, preferably 50° to 90°, better 50° to 70°, thus resulting in an interferential coating having a gold reflection.

In some aspects of the invention, the interferential coating has a chroma (C*) that is lower than 15 (for an angle of incidence of 15°), more preferably lower than 13. Obtaining low residual color intensity (chroma) articles is preferable with respect to wearer's comfort viewpoint, in the cases of ophthalmic lenses.

The colorimetric coefficients of the lenses of the invention have a good robustness. The robustness $\sigma h$ of the optical article, defined in WO 2015/000534, is satisfactory, and preferably lower than or equal to 8°, more preferably lower than or equal to 7.5°, for a hue angle h corresponding to green.

The invention further relates to a method of manufacturing an optical article such as described hereabove, comprising:

- providing an optical lens comprising a substrate having a front main face and a rear main face,
- depositing onto at least one main face of the substrate, in this order, a first high refractive index sheet (A) having a refractive index higher than 1.55, which does not comprise any $Ta_2O_5$ layer, a second low refractive index sheet (B) having a refractive index of 1.55 or less so that it is in direct contact with the former sheet (A), a third high refractive index sheet (C) having a refractive index higher than 1.55 so that it is in direct contact with the former sheet (B), a monolayer sub-layer having an exposed surface and a thickness higher than or equal to 100 nm so that it is in direct contact with the former sheet (C), and a multilayer interferential coating comprising a stack of at least one high refractive index layer having a refractive index higher than 1.55 and at least one low refractive index layer having a refractive index of 1.55 or less, at least one of the layers of the multilayer interferential coating being a light-absorbing layer comprising a light absorbing material, thereby obtaining a coated optical article, wherein the mean reflection factor Ruv on said rear main face between 280 nm and 380 nm, weighted by the function $W(\lambda)$ defined in the ISO 13666:1998 standard, is preferably lower than 10 %, for an angle of incidence of 35°.

In preferred embodiments, the exposed surface of the sub-layer has been submitted to an ionic bombardment treatment prior to depositing said multilayer interferential coating, and/or the deposition of the sub-layer is conducted in a vacuum chamber in which no supplementary gas is supplied during said deposition.

In another embodiment, the exposed surface of at least one layer of the multilayer interferential coating has been submitted to an ionic bombardment treatment prior to depositing the subsequent layer of said multilayer interferential coating.

In another embodiment, the exposed surface of each layer of the multilayer interferential coating except the layer of said coating that is the furthest from the substrate has been submitted to an ionic bombardment treatment prior to depositing the subsequent layer of said multilayer interferential coating. This embodiment involving multiple interlayer bombardments is preferably implemented when the sub-layer is deposited under a low pressure ($< 1.6 \times 10^{-4}$ mBar or even better in a vacuum chamber without supplying any additional gas during the deposition) to get a better adhesion of the layers within the interferential stack.

The exposed surface of sheet (C) is preferably submitted to an ionic bombardment treatment prior to depositing the subsequent layer, which is the sub-layer.

In another embodiment, the exposed surface of the following layers is submitted to an ionic bombardment treatment prior to depositing the subsequent layer onto said layers: sheet (C), the sub-layer and each layer of the multilayer interferential coating except the outermost layer of said coating.

In one embodiment, the present optical article is prepared by forming on the substrate a primer coating and/or an abrasion- and/or scratch-resistant coating in a first manufacturing site, while the other coatings are formed in a second manufacturing site.

The following examples illustrate the present invention in a more detailed, but non-limiting manner. Unless stated otherwise, all thicknesses disclosed in the present application relate to physical thicknesses. The percentages given in the tables are weight percentages. Unless otherwise specified, the refractive indexes referred to in the present invention are expressed at 20-25°C for a wavelength of 550 nm.

EXAMPLES

1. General procedures

The articles employed in the examples comprised a 65 mm-diameter polythiourethane MR8® lens substrate (from Mitsui Toatsu Chemicals Inc., refractive index = 1.59), with a power of -2.00 diopters and a thickness of 1.2 mm, coated on its convex main face with the impact resistant primer coating disclosed in the experimental part of WO 2010/109154 modified to have a refractive index of 1.6 by addition of high refractive index colloids, and the abrasion- and scratch-resistant coating (hard coat) disclosed in example 3 of EP 0614957 (modified to have a refractive index of 1.6 rather than 1.5 by adding high refractive index colloids), sheets (A), (B) and (C), a sub-layer, an antireflection coating, and the antifouling coating disclosed in the experimental section of patent application WO 2010/109154, i.e., by evaporation under vacuum of the Optool DSX® compound marketed by Daikin Industries (thickness: from 2 to 5 nm).

The various layers such as the sub-layers, sheets (A), (B) and (C) and the layers of the antireflection coating were deposited without heating the substrates, by vacuum evaporation, optionally assisted (IAD) during the deposition by a beam of oxygen and possibly argon ions, when specified (evaporation source: electron gun), and optionally under pressure regulation by supplying (passive) $O_2$ gas into the chamber, where indicated.

The vacuum evaporation device that made it possible to deposit the various antireflective layers was a vacuum coater Syrus3 from Bulher Leybold Optics having two systems for evaporating materials, an electron gun evaporation system, a thermal evaporator (Joule-effect evaporation system), and a Mark 2 ion gun from Veeco for use in the preliminary phase of preparation of the surface of the substrate by argon ion bombardment (IPC) and in the ion-assisted deposition (IAD) of the layers.

2. Preparation of the optical articles

The lenses were placed on a carrousel provided with circular openings intended to accommodate the lenses to be treated, the concave side facing the evaporation sources and the ion gun.

The method for producing optical articles comprises introducing the lens substrate provided with the primer and abrasion-resistant coatings into a vacuum deposition chamber, conducting a pumping step until a high vacuum was created, followed by an ion gun conditioning step (IGC, such as disclosed in FR 2957454, $3.5 \times 10^{-5}$ mBar as starting pressure, 140 V, 3.5 A, argon, 60 seconds), a substrate surface activation step using a bombardment with an argon ion beam (IPC) with a starting pressure of $5.10^{-4}$ mBar (the ion gun was set to 1.8 A, 100 V, 60 seconds), stopping the ionic irradiation, and then successively evaporating the required number of layers (sheets (A), (B) and (C), sub-layer, antireflection coating layers and antifouling coating) at a rate ranging from 0.4 to 3 nm/s, and lastly a ventilation step.

Forming an antireflection stack according to the present invention comprises a deposition step of a $ZrO_2$ layer (sheet (A)) at a rate of 1 nm/s under an $O_2$ pressure of $7.0 \times 10^{-5}$ mBar, a deposition step of a $SiO_2$ layer (sheet (B)) at a rate of 2 nm/s, a deposition step of a $ZrO_2$ layer (sheet (C)) at a rate of 1 nm/s under an $O_2$ pressure of $7.0 \times 10^{-5}$ mBar, a surface activation step of this $ZrO_2$ layer using an argon ion beam for 30 seconds (same treatment as IPC already conducted directly on the substrate), a deposition step of a $SiO_2$ sub-layer at a rate of 3 nm/s optionally under an $O_2$ atmosphere (at a pressure of $5 \times 10^{-5}$ mBar), a surface activation step of the sub-layer using an argon ion beam for 30 seconds (same treatment as IPC already conducted directly on the substrate), and the deposition of the antireflective layers including HI layers ($ZrO_2$, $SiO_x$, $SiN_y$, $SnO_2$ or $Ta_2O_5$, at a rate of 2 nm/s except the $SnO_2$ layers: 1 nm/s) and LI layers ($SiO_2$ at a rate of 2 nm/s), and lastly a deposition step of an Optool DSX® layer at a rate of 0.4 nm/s.

The deposition of $ZrO_2$ layers was done under gas supply ($O_2$, under a pressure of $7.5 \times 10^{-5}$ mBar). The deposition of $Ta_2O_5$ layers was done with an oxygen ion assistance (ion gun: 3 A, 130 V) leading to a pressure of about $2 \times 10^{-4}$ mBar. The deposition of the thin $SnO_2$ electrically conductive layers was done with an oxygen ion assistance (ion gun: 2 A, 120 V).

In the comparative examples, the absorbing layers were omitted.

3. Testing methods

The following test procedures were used to evaluate the optical articles prepared according to the present invention. Several samples for each system were prepared for measurements and the reported data were calculated with the average of the different samples.

Colorimetric measurements (in reflection) of the face coated with the stack of the invention: reflection factor Rv, hue angle h and chroma C* in the international colorimetric CIE (L*, a*, b*) space were carried out with a Zeiss spectrophotometer, taking into account the standard illuminant D65, and the standard observer 10° (for h and C*). They are provided for an angle of incidence of 15°. Ruv was computed from the same reflection measurement, at an angle of incidence of 35°.

The light transmission factor in the visible spectrum Tv was measured in transmission mode from a wearer's view angle using a Cary 4000 spectrophotometer from Hunter, with the back (concave) side of the lens (2 mm thickness at the center) facing the detector and light incoming on the front side of the lens. Tv was measured under D65 illumination conditions (daylight).

The thickness of the layers was controlled by means of a quartz microbalance.

4. Results

The structural characteristics and the optical performances of the ophthalmic lenses obtained in the examples are detailed hereunder. The sub-layer is gray-colored. The stack is deposited onto the front main face of the ophthalmic lenses when there is no indication in the table. 25 different lenses comprising at least one absorbent layer have been prepared.

| Example 1 | |
|---|---|
| Substrate + primer/hard coat | |
| ZrO$_2$ | 73.5 nm |
| SiO$_2$ | 62.5 nm |
| ZrO$_2$ | 10.5 nm |
| SiO$_2$ | 150 nm |
| ZrO$_2$ | 52 nm |
| SiO$_2$ | 100 nm |
| SiN$_y$ | 91.5 nm |
| SnO$_2$ | 6.5 nm |
| SiO$_2$ | 77 nm |
| Top coat | |

| Example 2 | |
|---|---|
| Substrate + primer/hard coat | |
| ZrO$_2$ | 25 nm |
| SiO$_2$ | 89 nm |
| ZrO$_2$ | 6 nm |
| SiO$_2$ | 150 nm |
| ZrO$_2$ | 102 nm |
| SiO$_2$ | 10 nm |
| SiN$_y$ | 13 nm |
| SnO$_2$ | 6.5 nm |
| SiO$_2$ | 87 nm |
| Top coat | |

| Example 3 | |
|---|---|
| Substrate + primer/hard coat | |
| ZrO$_2$ | 17.5 nm |
| SiO$_2$ | 37.5 nm |
| ZrO$_2$ | 18.5 nm |
| SiO$_2$ | 150 nm |
| ZrO$_2$ | 11.5 nm |
| SiO$_2$ | 24.5 nm |
| SiO$_x$ | 84 nm |
| SnO$_2$ | 6.5 nm |
| SiO$_2$ | 64.5 nm |
| Top coat | |

| Example 4 | |
|---|---|
| Substrate + primer/hard coat | |
| ZrO$_2$ | 37.5 nm |
| SiO$_2$ | 12 nm |
| ZrO$_2$ | 54 nm |
| SiO$_2$ | 150 nm |
| ZrO$_2$ | 18 nm |
| SiO$_2$ | 5 nm |
| SiO$_x$ | 74 nm |
| SnO$_2$ | 6.5 nm |
| SiO$_2$ | 61 nm |
| Top coat | |

| Example 5 | |
|---|---|
| Substrate + primer/hard coat | |
| ZrO$_2$ | 18 nm |
| SiO$_2$ | 28.5 nm |
| ZrO$_2$ | 6 nm |
| SiO$_2$ | 150 nm |
| ZrO$_2$ | 25 nm |
| SiO$_2$ | 6 nm |
| SiO$_x$ | 86 nm |
| SnO$_2$ | 6.5 nm |
| SiO$_2$ | 67.5 nm |
| Top coat | |

| Example 6 | |
|---|---|
| Substrate + primer/hard coat | |
| ZrO$_2$ | 25 nm |
| SiO$_2$ | 40.5 nm |
| ZrO$_2$ | 20 nm |
| SiO$_2$ | 150 nm |
| ZrO$_2$ | 20.5 nm |
| SiO$_2$ | 10 nm |
| SiO$_x$ | 89.5 nm |
| SnO$_2$ | 6.5 nm |
| SiO$_2$ | 70 nm |
| Top coat | |

| Example 7 | |
|---|---|
| Substrate + primer/hard coat | |
| ZrO$_2$ | 41 nm |
| SiO$_2$ | 28 nm |
| ZrO$_2$ | 68.5 nm |
| SiO$_2$ | 150 nm |
| ZrO$_2$ | 7.5 nm |
| SiO$_2$ | 47 nm |
| SiO$_x$ | 98 nm |
| SnO$_2$ | 6.5 nm |
| SiO$_2$ | 85.5 nm |
| Top coat | |

| Example 8 | |
|---|---|
| Substrate + primer/hard coat | |
| ZrO$_2$ | 27.5 nm |
| SiO$_2$ | 11.5 nm |
| ZrO$_2$ | 90.5 nm |
| SiO$_2$ | 150 nm |
| ZrO$_2$ | 8 nm |
| SiO$_2$ | 5.5 nm |
| SiO$_x$ | 87.5 nm |
| SnO$_2$ | 6.5 nm |
| SiO$_2$ | 58 nm |
| Top coat | |

| Example 9 | |
|---|---|
| Substrate + primer/hard coat | |
| ZrO$_2$ | 23 nm |
| SiO$_2$ | 53 nm |
| ZrO$_2$ | 22 nm |
| SiO$_2$ | 150 nm |
| ZrO$_2$ | 65.5 nm |
| SiO$_2$ | 19.5 nm |
| SiO$_x$ | 16 nm |
| SnO$_2$ | 6.5 nm |
| SiO$_2$ | 63.5 nm |
| Top coat | |

| Example 10 | |
|---|---|
| Substrate + primer/hard coat | |
| ZrO$_2$ | 41 nm |
| SiO$_2$ | 46.5 nm |
| ZrO$_2$ | 25 nm |
| SiO$_2$ | 150 nm |
| SiN$_y$ | 7.5 nm |
| SiO$_2$ | 50 nm |
| SiN$_y$ | 11 nm |
| SnO$_2$ | 6.5 nm |
| SiO$_2$ | 102.5 nm |
| Top coat | |

| Example 11 | |
|---|---|
| Substrate + primer/hard coat | |
| ZrO$_2$ | 43.5 nm |
| SiO$_2$ | 24.5 nm |
| ZrO$_2$ | 45.5 nm |
| SiO$_2$ | 150 nm |
| SiN$_y$ | 7.5 nm |
| SiO$_2$ | 50 nm |
| SiN$_y$ | 12.5 nm |
| SnO$_2$ | 6.5 nm |
| SiO$_2$ | 81 nm |
| Top coat | |

| Example 12 | |
|---|---|
| Substrate + primer/hard coat | |
| ZrO$_2$ | 116.5 nm |
| SiO$_2$ | 18.5 nm |
| ZrO$_2$ | 15.5 nm |
| SiO$_2$ | 150 nm |
| SiN$_y$ | 11.5 nm |
| SiO$_2$ | 50 nm |
| SiN$_y$ | 12 nm |
| SnO$_2$ | 6.5 nm |
| SiO$_2$ | 91.5 nm |
| Top coat | |

| Example 13 | |
|---|---|
| Substrate + primer/hard coat | |
| $ZrO_2$ | 50 nm |
| $SiO_2$ | 76.5 nm |
| $ZrO_2$ | 6.5 nm |
| $SiO_2$ | 150 nm |
| $SiN_y$ | 18.5 nm |
| $SiO_2$ | 38.5 nm |
| $SiN_y$ | 6.5 nm |
| $SnO_2$ | 6.5 nm |
| $SiO_2$ | 74.5 nm |
| Top coat | |

| Example 14 | |
|---|---|
| Substrate + primer/hard coat | |
| $ZrO_2$ | 34 nm |
| $SiO_2$ | 59.5 nm |
| $ZrO_2$ | 6 nm |
| $SiO_2$ | 150 nm |
| $SiN_y$ | 17 nm |
| $SiO_2$ | 40.5 nm |
| $SiN_y$ | 14 nm |
| $SnO_2$ | 6.5 nm |
| $SiO_2$ | 77 nm |
| Top coat | |

| Example 15 | |
|---|---|
| Substrate + primer/hard coat | |
| $ZrO_2$ | 6 nm |
| $SiO_2$ | 79.5 nm |
| $ZrO_2$ | 61.5 nm |
| $SiO_2$ | 150 nm |
| $SiN_y$ | 98.5 nm |
| $SiO_2$ | 68.5 nm |
| $SiN_y$ | 95.5 nm |
| $SnO_2$ | 6.5 nm |
| $SiO_2$ | 81.5 nm |
| Top coat | |

| Example 16 | |
|---|---|
| Substrate + primer/hard coat | |
| $ZrO_2$ | 25 nm |
| $SiO_2$ | 55.5 nm |
| $ZrO_2$ | 16 nm |
| $SiO_2$ | 150 nm |
| $SiO_x$ | 12.5 nm |
| $SiO_2$ | 40 nm |
| $SiO_x$ | 138.5 nm |
| $SnO_2$ | 6.5 nm |
| $SiO_2$ | 97.5 nm |
| Top coat | |

| Example 17 | |
|---|---|
| Substrate + primer/hard coat | |
| $ZrO_2$ | 7 nm |
| $SiO_2$ | 81.5 nm |
| $ZrO_2$ | 16.5 nm |
| $SiO_2$ | 150 nm |
| $SiO_x$ | 15 nm |
| $SiO_2$ | 39.5 nm |
| $SiO_x$ | 97 nm |
| $SnO_2$ | 6.5 nm |
| $SiO_2$ | 89.5 nm |
| Top coat | |

| Example 18 | |
|---|---|
| Substrate + primer/hard coat | |
| $ZrO_2$ | 19.5 nm |
| $SiO_2$ | 56 nm |
| $ZrO_2$ | 6 nm |
| $SiO_2$ | 150 nm |
| $SiO_x$ | 20.5 nm |
| $SiO_2$ | 29 nm |
| $SiO_x$ | 38.5 nm |
| $SnO_2$ | 6.5 nm |
| $SiO_2$ | 94.5 nm |
| Top coat | |

| Example 19 | |
|---|---|
| Substrate + primer/hard coat | |
| $ZrO_2$ | 24 nm |
| $SiO_2$ | 51 nm |
| $ZrO_2$ | 11.5 nm |
| $SiO_2$ | 150 nm |
| $SiO_x$ | 19.5 nm |
| $SiO_2$ | 30.5 nm |
| $SiO_x$ | 12 nm |
| $SnO_2$ | 6.5 nm |
| $SiO_2$ | 78 nm |
| Top coat | |

| Example 20 | |
|---|---|
| Substrate + primer/hard coat | |
| $ZrO_2$ | 81 nm |
| $SiO_2$ | 57.5 nm |
| $ZrO_2$ | 11.5 nm |
| $SiO_2$ | 150 nm |
| $SiO_x$ | 49 nm |
| $SiO_2$ | 63 nm |
| $SiN_y$ | 99 nm |
| $SnO_2$ | 6.5 nm |
| $SiO_2$ | 82.5 nm |
| Top coat | |

| Example 21 | |
|---|---|
| Substrate + primer/hard coat | |
| $ZrO_2$ | 44.5 nm |
| $SiO_2$ | 51 nm |
| $ZrO_2$ | 21.5 nm |
| $SiO_2$ | 150 nm |
| $SiN_y$ | 7.5 nm |
| $SiO_2$ | 20 nm |
| $SiO_x$ | 220 nm |
| $SnO_2$ | 6.5 nm |
| $SiO_2$ | 92.5 nm |
| Top coat | |

| Example 22 | |
|---|---|
| Substrate + primer/hard coat | |
| $ZrO_2$ | 79 nm |
| $SiO_2$ | 86.5 nm |
| $ZrO_2$ | 5.5 nm |
| $SiO_2$ | 150 nm |
| $SiN_y$ | 118 nm |
| $SiO_2$ | 6.5 nm |
| $SiO_x$ | 166 nm |
| $SnO_2$ | 6.5 nm |
| $SiO_2$ | 87 nm |
| | |
| | |
| Top coat | |

| Example 23 | |
|---|---|
| Substrate + primer/hard coat | |
| $ZrO_2$ | 50 nm |
| $SiO_2$ | 22.5 nm |
| $ZrO_2$ | 48.5 nm |
| $SiO_2$ | 199 nm |
| $Ta_2O_5$ | 81.5 nm |
| $SiO_2$ | 10 nm |
| $SiN_y$ | 89 nm |
| $SiO_2$ | 25.5 nm |
| $SiN_y$ | 7 nm |
| $SnO_2$ | 6.5 nm |
| $SiO_2$ | 60 nm |
| Top coat | |

| Example 24 | |
|---|---|
| Substrate + primer/hard coat | |
| $ZrO_2$ | 49.5 nm |
| $SiO_2$ | 40 nm |
| $ZrO_2$ | 45 nm |
| $SiO_2$ | 232.5 nm |
| $SiN_y$ | 101 nm |
| $SiO_2$ | 19.5 nm |
| $SiN_y$ | 89.5 nm |
| $SiO_2$ | 24.5 nm |
| $SiN_y$ | 7 nm |
| $SnO_2$ | 6.5 nm |
| $SiO_2$ | 58.5 nm |
| Top coat | |

| Example 25 | |
|---|---|
| | |
| Substrate + primer/hard coat | |
| ZrO$_2$ | 50 nm |
| SiO$_2$ | 10 nm |
| ZrO$_2$ | 11 nm |
| SiO$_2$ | 246 nm |
| SiN$_y$ | 150 nm |
| SiO$_2$ | 5 nm |
| SiN$_y$ | 118 nm |
| SiO$_2$ | 23.5 nm |
| SiN$_y$ | 10.5 nm |
| SnO$_2$ | 6.5 nm |
| SiO$_2$ | 80.5 nm |
| Top coat | |

| Comparative example 1 | |
|---|---|
| | |
| Substrate + primer/hard coat | |
| ZrO$_2$ | 8 nm |
| SiO$_2$ | 47.5 nm |
| ZrO$_2$ | 12 nm |
| SiO$_2$ | 201.5 nm |
| Ta$_2$O$_5$ | 27 nm |
| SiO$_2$ | 21 nm |
| Ta$_2$O$_5$ | 54.5 nm |
| SnO$_2$ | 6.5 nm |
| SiO$_2$ | 98 nm |
| | |
| | |
| Top coat | |

| Comparative example 2 | |
|---|---|
| | |
| Substrate + primer/hard coat | |
| ZrO$_2$ | 12 nm |
| SiO$_2$ | 50 nm |
| ZrO$_2$ | 11 nm |
| SiO$_2$ | 154.5 nm |
| Ta$_2$O$_5$ | 23.5 nm |
| SiO$_2$ | 38.5 nm |
| Ta$_2$O$_5$ | 37 nm |
| SnO$_2$ | 6.5 nm |
| SiO$_2$ | 95.5 nm |
| Top coat | |

| Comparative example 3 | |
|---|---|
| | |
| Substrate + primer/hard coat | |
| ZrO$_2$ | 10 nm |
| SiO$_2$ | 62 nm |
| ZrO$_2$ | 12.5 nm |
| SiO$_2$ | 153.5 nm |
| ZrO$_2$ | 21 nm |
| SiO$_2$ | 39.5 nm |
| ZrO$_2$ | 45 nm |
| SnO$_2$ | 6.5 nm |
| SiO$_2$ | 93.5 nm |
| Top coat | |

| | Rv(15°) (%) | h (°) | C* | σh (°) | σC* | Ruv (%) | Tv (%) | Category* | Rv(35°) (%) |
|---|---|---|---|---|---|---|---|---|---|
| Example-1 | 0.68 | 302 | 48.0 | 6.92 | 4.84 | 21.46 | 27.94 | 2 | 1.19 |
| Example-2 | 0.65 | 318 | 48.0 | 2.66 | 4.52 | 28.18 | 78.80 | 1 | 1.63 |
| Example-3 | 0.76 | 45 | 15.0 | 7.81 | 2.90 | 5.24 | 80.34 | 0 | 1.37 |
| Example-4 | 0.93 | 45 | 18.0 | 6.90 | 3.24 | 2.95 | 82.84 | 0 | 1.88 |
| Example-5 | 0.73 | 135 | 13.5 | 6.94 | 4.05 | 7.82 | 80.00 | 0/1 | 1.12 |
| Example-6 | 0.32 | 137 | **0.8** | 102.41 | 1.03 | 8.49 | 79.56 | 1 | 0.74 |
| Example-7 | 0.40 | 270 | 25.0 | 6.73 | 3.28 | 15.52 | 77.29 | 1 | 0.31 |
| Example-8 | 0.84 | 355 | **1.0** | 98.56 | 3.16 | 2.95 | 79.63 | 1 | 1.39 |
| Example-9 | 0.60 | 308 | 38.0 | 4.42 | 1.87 | 2.01 | 94.29 | 0 | 1.09 |
| Example-10 | 0.42 | 290 | 35.0 | 3.20 | 2.10 | 22.14 | 69.08 | 1 | 0.41 |
| Example-11 | 0.77 | 45 | 15.0 | 10.35 | 2.42 | 15.19 | 68.11 | 1 | 1.81 |
| Example-12 | 0.35 | 262 | **1.0** | 86.05 | 1.71 | 15.67 | 63.20 | 1 | 0.51 |
| Example-13 | 0.55 | 300 | 50.0 | 2.28 | 1.12 | 2.53 | 61.66 | 1 | 0.61 |
| Example-14 | 0.75 | 135 | 13.5 | 6.17 | 3.72 | 9.34 | 57.48 | 1 | 1.06 |
| Example-15 | 0.68 | 300 | 50.0 | 5.87 | 4.75 | 23.91 | 7.83 | 4 | 0.93 |
| Example-16 | 0.54 | 300 | 50.0 | 2.40 | 1.50 | 17.97 | 65.94 | 1 | 0.49 |

(continued)

|  | Rv(15°) (%) | h (°) | C* | σh (°) | σC* | Ruv (%) | Tv (%) | Category* | Rv(35°) (%) |
|---|---|---|---|---|---|---|---|---|---|
| Example-17 | 0.71 | 280 | 34.0 | 5.30 | 2.97 | 16.21 | 72.30 | 1 | 0.42 |
| Example-18 | 0.23 | 300 | 40.0 | 0.96 | 3.19 | 18.67 | 83.20 | 0 | 0.34 |
| Example-19 | 0.52 | 330 | 31.8 | 6.67 | 2.06 | 2.91 | 89.71 | 0 | 1.58 |
| Example-20 | 0.86 | 300 | 50.7 | 5.41 | 4.20 | 24.30 | 21.45 | 2 | 1.25 |
| Example-21 | 0.45 | 300 | 45.0 | 2.23 | 1.12 | 17.22 | 49.37 | 1 | 0.39 |
| Example-22 | 0.58 | 300 | 40.0 | 3.85 | 4.22 | 15.64 | 15.00 | 3 | 0.53 |
| Example-23 | 0.41 | 270 | 12.0 | 7.98 | 1.50 | 2.02 | 31.25 | 2 | 0.50 |
| Example-24 | 0.38 | 270 | 8.5 | 10.88 | 1.35 | 2.00 | 10.39 | 3 | 0.50 |
| Example-25 | 0.57 | 265 | 11.0 | 5.81 | 1.71 | 7.99 | 4.56 | 4 | 0.46 |
| Comp. Ex 1 | 0.47 | 261 | 14.4 | 6.1 | 1.9 | 36.7 | 99.5 | 0 | 0.37 |
| Comp. Ex 2 | 0.79 | 135 | 10.8 | 7.4 | 2.0 | 37.7 | 99.2 | 0 | 0.92 |
| Comp. Ex 3 | 0.75 | 135 | 10.3 | 7.2 | 1.9 | 21.9 | 99.1 | 0 | 0.87 |
| * According to European standard NF EN 1836+A1 (December 2007) | | | | | | | | | |

Examples 4, 8, 9, 13, 19, 23 and 24 exhibit very low reflection in the UV range (280-380 nm) (Ruv < 3 %), while examples 1, 2, 10, 15 and 20 exhibit very high reflection in the UV range (Ruv > 20 %). The designs with low UV reflection are more suitable for use on the concave side of a lens, while those with high UV reflection are be more adapted for use on the convex side of a lens.

The absorbing antireflection coatings of examples 7, 13, 17, 21 and 25 exhibit a strong multiangular efficiency, since they have a parameter $R_{vmin} / R_v(15°) < 0.8$, $R_v(15°)$ being the mean light reflection factor for an angle of incidence $\theta$ of 15° on the coated main face, defined in the ISO 13666:1998 standard (respectively 0.62, 0.77, 0.59, 0.75 and 0.4), and in the range [0°-50°] of angles of incidence $\theta$, the mean light reflection factor as a function of incident angle $R_v(\theta)$ on the coated main face presents a minimum value $R_{vmin}$ for an angle of incidence $\theta_{min}$ comprised in the range [20°-50°]. The Rv parameters for these examples are quite low at 15° and 35° ($\leq 0.71$ %).

The absorbing antireflection coatings of examples 10-14 exhibit high abrasion resistance.

Most of the prepared coatings have colorimetric coefficients with a robustness compatible with industrialization ($\sigma h \leq 8°$ and/or $\sigma C^* \leq 3$ for example).

Most of the prepared coatings can be used for sunglass applications, since the transmittance of the coated articles can be flexibly controlled from class 1 to class 4 according to European standard NF EN 1836+A1. Several stacks have been designed using 1 to 3 absorbing layers with visual transmission (Tv) ranging from 4.6 to 94.3%. As described above, the transmittance can be controlled, from class 0 to class 4, by the thickness and/or composition of the light absorptive layers. On the contrary, the visual transmission (Tv) is very high for the comparative coatings 1 to 3 without any absorbing layer (Tv > 99%).

Obviously, it is possible to combine several of the prepared coatings on both main faces of a lens to have cumulative advantages according to the specifications required, for example a lens having a low reflection in the UV range on the rear face and a strong multiangular efficiency for the antireflective properties in the visible range on the front face.

**Claims**

1. An optical lens comprising a substrate having a front main face and a rear main face, at least one main face of which being successively coated with:

- (A) a first high refractive index sheet having a refractive index higher than 1.55, which does not comprise any $Ta_2O_5$ layer,
- (B) a second low refractive index sheet having a refractive index of 1.55 or less in direct contact with the former sheet (A),
- (C) a third high refractive index sheet having a refractive index higher than 1.55 in direct contact with the former sheet (B),
- a monolayer sub-layer having a thickness higher than or equal to 100 nm in direct contact with the former sheet (C), and
- a multilayer interferential coating comprising a stack of at least one high refractive index layer having a refractive index higher than 1.55 and at least one low refractive index layer having a refractive index of 1.55 or less, the refractive indexes being expressed for a wavelength of 550 nm, at least one of the layers of the multilayer interferential coating being a visible light-absorbing layer comprising a visible light absorbing material.

2. An optical lens according to any one of the preceding claims, wherein said visible light absorbing material is a sub-stoichiometric inorganic material having a refractive index higher than 1.55.

3. An optical lens according to claim 2, wherein said sub-stoichiometric inorganic material is selected from $SiN_y$, $SiO_x$, $TiO_x$ and $ZrO_x$, where $y < 1$ and $x < 2$.

4. An optical lens according to any one of the preceding claims, wherein said layer of visible light absorbing material has an extinction coefficient k at 550 nm higher than or equal to 0.1.

5. An optical lens according to any one of the preceding claims, wherein the sub-layer is an $SiO_2$-based layer.

6. An optical lens according to any one of the preceding claims, wherein the interferential coating comprises at least one electrically conductive layer, preferably a $SnO_2$ based layer.

7. An optical lens according to any one of the preceding claims, wherein the interferential coating is an antireflection coating having a mean light reflection factor $R_v$ lower than or equal to 2.5 %.

8. An optical lens according to any one of the preceding claims, wherein the optical lens is an ophthalmic lens.

9. An optical lens according to any one of the preceding claims, wherein the first high refractive index sheet (A) having a refractive index higher than 1.55 is a $ZrO_2$-based layer.

10. An optical lens according to any one of the preceding claims, wherein the second low refractive index sheet (B) having a refractive index of 1.55 or less is a $SiO_2$-based layer.

11. An optical lens according to any one of the preceding claims, wherein the third high refractive index sheet (C) having a refractive index higher than 1.55 comprises at least one material selected from $Ta_2O_5$, $Nb_2O_5$, $PrTiO_3$, $ZrO_2$ and $Y_2O_3$.

12. An optical lens according to any one of the preceding claims, wherein the mean light reflection factor as a function of incident angle $R_v(\theta)$ on at least one main face has a minimum value $R_{vmin}$ for an angle of incidence $\theta_{min}$ comprised in the range [20°-50°] and $R_{vmin} / R_v(15°) < 0.95$, preferably $R_{vmin} / R_v(15°) < 0.90$, $R_v(15°)$ being the mean light reflection factor for an angle of incidence $\theta$ of 15° on said main face, defined in the ISO 13666:1998 standard.

13. An optical lens according to any one of the preceding claims, wherein the mean reflection factor $R_{UV}$ on said rear main face between 280 nm and 380 nm, weighted by the function $W(\lambda)$ defined in the ISO 13666:1998 standard, is lower than 10 %, for an angle of incidence of 35°.

14. A method of manufacturing an optical lens according to any one of the preceding claims, comprising:

   - providing an optical lens comprising a substrate having a front main face and a rear main face,
   - depositing onto at least one main face of the substrate, in this order, a first high refractive index sheet (A) having a refractive index higher than 1.55, which does not comprise any $Ta_2O_5$ layer, a second low refractive index sheet (B) having a refractive index of 1.55 or less so that it is in direct contact with the former sheet (A), a third high refractive index sheet (C) having a refractive index higher than 1.55 so that it is in direct contact with the former sheet (B), a monolayer sub-layer having a thickness higher than or equal to 100 nm so that it is in direct contact with the former sheet (C), and a multilayer interferential coating comprising a stack of at least one high refractive index layer having a refractive index higher than 1.55 and at least one low refractive index layer having a refractive index of 1.55 or less, the refractive indexes being expressed for a wavelength of 550 nm, at least one of the layers of the multilayer interferential coating being a visible light-absorbing layer comprising a visible light absorbing material.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

Figure 21

Figure 22

Figure 23

Figure 24

Figure 25

Figure 26 (comparative example 1)

Figure 27 (comparative example 2)

Figure 28 (comparative example 3)

Europäisches
Patentamt

European
Patent Office

Office européen
des brevets

# EUROPEAN SEARCH REPORT

Application Number

EP 21 30 5851

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2020/104388 A2 (ESSILOR INT [FR]) 28 May 2020 (2020-05-28) * claim 1 * * page 8, line 19 - line 23 * ----- | 1-14 | INV. G02B1/115 G02B5/22 |
| Y | EP 1 697 770 A1 (ESSILOR INT [FR]) 6 September 2006 (2006-09-06) * claim 1 * * paragraph [0011] - paragraph [0012] * ----- | 1-14 | |
| Y | WO 2020/104381 A2 (ESSILOR INT [FR]) 28 May 2020 (2020-05-28) * claim 1 * ----- | 1-14 | |
| A | EP 3 654 072 A1 (ESSILOR INT [FR]) 20 May 2020 (2020-05-20) * claim 1 * ----- | 1-14 | |

TECHNICAL FIELDS
SEARCHED      (IPC)

G02B

The present search report has been drawn up for all claims

| Place of search | Date of completion of the search | Examiner |
|---|---|---|
| Munich | 24 November 2021 | Le Masson, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 30 5851

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2021

| Patent document cited in search report | | Publication date | Patent family member(s) | | Publication date |
|---|---|---|---|---|---|
| WO 2020104388 | A2 | 28-05-2020 | BR 112021009279 | A2 | 10-08-2021 |
| | | | CN 113167927 | A | 23-07-2021 |
| | | | EP 3884315 | A2 | 29-09-2021 |
| | | | KR 20210092737 | A | 26-07-2021 |
| | | | WO 2020104388 | A2 | 28-05-2020 |
| EP 1697770 | A1 | 06-09-2006 | AT 422060 | T | 15-02-2009 |
| | | | EP 1697770 | A1 | 06-09-2006 |
| | | | ES 2319538 | T3 | 08-05-2009 |
| | | | FR 2864251 | A1 | 24-06-2005 |
| | | | JP 4795969 | B2 | 19-10-2011 |
| | | | JP 2007520738 | A | 26-07-2007 |
| | | | US 2007178315 | A1 | 02-08-2007 |
| | | | WO 2005059603 | A1 | 30-06-2005 |
| WO 2020104381 | A2 | 28-05-2020 | BR 112021009285 | A2 | 10-08-2021 |
| | | | CN 113167926 | A | 23-07-2021 |
| | | | EP 3884314 | A2 | 29-09-2021 |
| | | | KR 20210092740 | A | 26-07-2021 |
| | | | WO 2020104381 | A2 | 28-05-2020 |
| EP 3654072 | A1 | 20-05-2020 | CN 113056683 | A | 29-06-2021 |
| | | | EP 3654072 | A1 | 20-05-2020 |
| | | | KR 20210092739 | A | 26-07-2021 |
| | | | WO 2020104392 | A2 | 28-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003195003 A
- JP 2003294906 A
- WO 2020104391 A
- US 7736742 B
- US 4689387 A
- US 4775733 A
- US 5059673 A
- US 5087758 A
- US 5191055 A
- WO 2013013929 A
- WO 2017021669 A
- FR 2943798
- EP 20315205
- US 2006017011 A
- US 5268781 A

- US 2008206470 A
- JP 63141001 A
- JP 63087223 A
- US 5015523 A
- US 6503631 B
- EP 0404111 A
- US 5316791 A
- EP 0680492 A
- EP 0614957 A
- US 4211823 A
- WO 2012076714 A
- WO 2011080472 A
- WO 2015000534 A
- WO 2010109154 A
- FR 2957454

**Non-patent literature cited in the description**

- Thin Film Processes'' and ''Thin Film Processes II. Academic Press, 1978